# EUROPÄISCHE PATENTSCHRIFT

(11) **EP 4 568 901 B1**
(45) Veröffentlichungstag und Bekanntmachung des Hinweises auf die Patenterteilung: **04.03.2026**
(21) Anmeldenummer: 23757541.0
(22) Anmeldetag: 09.08.2023
(51) Int. Cl.: B65G 1/02, B65G 1/04

(54) **PASSIVES REGALSYSTEM**
PASSIVE SHELVING SYSTEM
SYSTÈME D'ÉTAGÈRES PASSIF

(30) Priorität: 11.08.2022 DE 102022002933
(43) Veröffentlichungstag der Anmeldung: 18.06.2025
(73) Patentinhaber: advastore SE, 83246 Unterwössen (DE)
(72) Erfinder: KOCH, Rupert, 83457 Bayerisch Gmain (DE); MEIRER, Leopold, 83246 Unterwössen (DE); DHOM, Maximilian, 83139 Söchtenau (DE)
(74) Vertreter: Müller Schupfner & Partner Patent- und Rechtsanwaltspartnerschaft mbB (Muc)
(86) Internationale Anmeldenummer: PCT/EP2023/072063
(87) Internationale Veröffentlichungsnummer: WO 2024/033419

(56) Entgegenhaltungen:
- EP-A1- 3 992 116
- US-A1- 2019 291 955
- US-B1- 7 381 022

## Beschreibung

Die vorliegende Erfindung betrifft ein passives Regalsystem, insbesondere für ein Hochregallager.

Im Stand der Technik ist es bekannt Hochregallager vorzusehen, um entweder große Mengen an Waren effizient zu lagern oder kleinere Mengen an Waren in Empfängernähe bereitzustellen. Das Hochregallager stellt ein Lagersystem dar, welches eine hohe Raumnutzung aufweist. Jedoch bedarf ein solches Hochregallager bei der Erstellung hoher Investitionen. Meist werden solche Systeme voll elektronisch mit einem Lagerverwaltungssystem bewirtschaftet. Dabei werden die Waren innerhalb des Lagers von Regalbediengeräten (beispielsweise Shuttle) befördert. Der steigende Bedarf an Waren sowie deren zügige Zustellung beispielsweise im Rahmen einer Kurzzeitlieferung werden immer wichtiger. Zudem steigt auch zunehmend der Automatisierungsgrad solcher Lager. Somit können Defekte oder Fehlfunktionen einzelner Komponenten oder Bauteile der Lager zu Betriebsausfällen ganzer Lager führen. Dies wiederum kann erheblichen Einfluss auf einen Warennachschub haben.

Die EP 3 992 116 A1 zeigt ein automatisiertes Kleinteilregalsystem mit einer Vielzahl von Regalreihen, zwischen denen ein oder mehrere Gänge vorgesehen sind.

Die US 2019/0291955 A1 zeigt ein Regalsystem, in das eines oder mehrere Shuttles verfahrbar sind. US 20019/0291955 A1 offenbart ein Passives Regalsystem nach dem Oberbegriff des Anspruchs 1 und ein Verfahren zum Betreiben des Regalsystems.

Die US 7381022 B1 zeigt ein Lager- und Verteilsystem, mit einer Vielzahl von Transportfahrzeugen und ein Speichersystem.

Daher ist es eine Aufgabe der vorliegenden Erfindung, ein Regalsystem bereitzustellen, das sowohl eine vollautomatische Bewirtschaftung erlaubt, als auch eine gesteigerte Ausfallsicherheit aufweist. Gelöst wird dieses Problem mit einem Regalsystem mit den Merkmalen des Anspruchs 1 und mit einem Verfahren zum Betreiben eines solchen Regalsystems mit den Merkmalen des Anspruchs 15.

Gemäß einem Aspekt der vorliegenden Erfindung wird ein passives Regalsystem, insbesondere für ein Hochlager bereitgestellt. Das Regalsystem kann einen Regalbereich mit zumindest zwei Regalböden an unterschiedlichen Vertikalpositionen umfassen. Ferner kann das Regalsystem zumindest zwei Regalschienenabschnitte, welche jeweils entlang der zumindest zwei Regalböden verlaufen, umfassen, wobei die Regalschienenabschnitte so ausgestaltet sein können, dass sich ein Shuttle horizontal auf den Regalschienenabschnitten fortbewegen kann. Zudem kann das Regalsystem zumindest einen passiven Steigerbereich umfassen, der die Regalschienenabschnitte miteinander verbindet, und so ausgestaltet ist, dass sich das Shuttle durch den Steigerbereich von einem Regalschienenabschnitt zu einem anderen Regalschienenabschnitt in einer Vertikalbewegungsrichtung bewegen kann.

Gegenüber dem bekannten Stand der Technik bietet, die vorliegende Erfindung gemäß einem Aspekt den Vorteil, dass das Regalsystem vollständig passiv ausgebildet sein kann. Mit anderen Worten ist keine aktive Steuerung des Regalsystems notwendig, um ein vollautomatisiertes Regalsystem bereitzustellen. Genauer gesagt kann das Regalsystem durch ein aktiv gesteuertes Shuttle so bedient werden, dass das Regalsystem keinerlei aktivgesteuerte Betätigungen und/oder Bewegungen oder dergleichen ausführen muss. Vielmehr kann das Regalsystem passiv sein und lediglich auf bestimmte Interaktionen, welche von dem Shuttle bewirkt werden können, gesteuert werden. Mit anderen Worten kann das Regalsystem passiv oder indirekt gesteuert sein. Passiv ausgestaltet kann bedeuten, dass keine Weichen oder Schalter in dem Regalsystem vorgesehen sind, die eine Bewegungsrichtung eines Shuttles beeinflussen können. Dadurch kann das Regalsystem zuverlässiger betrieben werden.

Somit kann ein besonders robustes und einfach zu steuerndes Regalsystem bereitgestellt sein. Ferner können keine Fehlbedienung durch Fehlsteuerung vorkommen, da das Regalsystem nicht aktiv oder direkt gesteuert werden muss. Somit kann die Ausfallsicherheit des Regalsystems erhöht werden, wodurch stets ein sicheres Ein- und Auslagen von Waren ermöglicht ist.

Das passive Regalsystem kann dadurch charakterisiert sein, dass keine Aktuatoren an dem Regalsystem vorgesehen sind. Ferner kann das Regalsystem keinen Stromanschluss oder Datenanschluss aufweisen, mit dem das Regalsystem mit einer Steuereinheit oder einer Stromquelle verbunden sein müsste. Passiv kann hierbei bedeuten, dass das Regalsystem keine aktiven Interaktionen bewirkt, sondern lediglich auf Interaktionen von Dritten reagiert. Mit anderen Worten kann das Regalsystem lediglich (beispielsweise ausschließlich) indirekt gesteuert werden. Diese Reaktion kann hierbei stromlos (beispielsweise rein mechanisch) erfolgen. Dadurch kann wiederum die Standsicherheit des Regalsystems erhöht sein.

Der Regalbereich kann der Bereich sein, in welchem die Waren oder Artikel eingelagert werden können. Ferner kann der Regalbereich Transportabschnitte wie beispielsweise Regalschienenabschnitte aufweisen, welche dazu ausgestaltet sind, einem Shuttle zu ermöglichen, Waren automatisiert in den Regalbereich ein- und auszuführen. Die Regalböden des Regalbereichs können dabei horizontale Strukturen sein, auf denen Waren abgelegt werden können. Dabei können die Regalböden parallel zu der Horizontalen sein. Ferner können die Regalböden übereinander (d.h. in der Schwererichtung oder der Vertikalrichtung) angeordnet sein. Mit anderen Worten können die Regalböden an unterschiedlichen Vertikalpositionen vorgesehen sein. Vorzugsweise weist der Regalbereich eine Vielzahl von Regalböden auf, die jeweils an unterschiedlichen Vertikalposition angeordnet sind. Jeder Regalboden kann eine Regalebene definieren, die eine vertikale Position definiert. Somit kann der Regalbereich eine Vielzahl von Regalebenen übereinander aufweisen. Die Regalböden können durch vertikale Stützpfeiler gehalten sein. Vorzugsweise sind die Regalböden im Wesentlichen eben ausgestaltet, sodass Waren problemlos darauf abgelegt werden können und in der abgelegten Position verbleiben. Eben bedeutet hierbei, dass keine Strukturen oder Unterteilungen an den Regalböden vorgesehen sind. Mit anderen Worten sind die Regalböden dazu ausgestaltet, Waren individuell darauf aufzunehmen. Somit ist keine vorherige Definition bestimmter Ablagebereiche notwendig, und Waren können völlig individuell auf den Regalböden abgelegt werden. Die Regalböden können eine durchgehende und flächige Ebene definieren, auf die Waren direkt (d.h. ohne Behälter oder dergleichen) abgelegt werden können. Vorzugsweise sind die Regalböden kontinuierlich und durchgehend ausgestaltet. Somit kann das Lager hoch effizient betrieben werden, da Waren individuell angrenzend an benachbarte Waren eingelagert werden können. Mit anderen Worten können Waren individuell nebeneinander und/oder hintereinander auf den Regalböden gelagert werden. Somit muss vorher nicht bestimmt werden, welche Waren in etwaige vorgeformte oder begrenzte Ablagebereiche des Regalbereichs einzulagern sind. Ferner können die Regalbereiche Waren ohne zusätzliche Transporteinrichtungen, wie Transportkisten oder dergleichen aufnehmen. Dadurch kann die Effizienz des Lagersystems weiter gesteigert sein.

Regalschienenabschnitte können eine oder mehrere Schienen (beispielsweise zwei parallel verlaufende Schienen) umfassen, auf denen ein Shuttle ähnlich einem Schienenfahrzeug fahren kann. Dabei können die Regalschienenabschnitte entlang bzw. parallel der Regalböden verlaufen. Somit kann ein Shuttle, welches auf den Regalschienenabschnitten positioniert ist, Waren auf die Regalböden ein- und auslagen. Vorzugsweise verlaufen die Regalschienenabschnitte horizontal. Mit anderen Worten können die Regalschienenabschnitte als horizontal betrachtet werden, wenn sie nicht mehr als 5 % von der Horizontalen abweichen. Somit kann ein Shuttle, welches auf den Regalschienenabschnitten fährt, nicht zu anderen Regalschienenabschnitten anderer Regalebenen wechseln, da die Regalschienenabschnitte lediglich horizontal verlaufen. Somit ist eine Fortbewegung des Shuttles auf den Regalschienenabschnitten lediglich einer Regalebene möglich.

Zur Überwindung eines Höhenabstands oder Höhenunterschieds zwischen den Regalböden bzw. Regalschienenabschnitten weist das Regalsystem einen passiven Steigerbereich auf. Der Steigerbereich kann also dazu ausgestaltet sein, das Shuttle vertikal zwischen verschiedenen Regalschienenabschnitten, welche an verschiedenen Vertikalpositionen in dem Regalbereich vorgesehen sind, zu bewegen. Dabei ist auch der passive Steigerbereich als ein passives Element ausgestaltet, in welchem sich das Shuttle fortbewegen kann. Mit anderen Worten bewirkt nicht der Steigerbereich, dass sich das Shuttle vertikal bewegt. Der Steigerbereich kann vier Stützen aufweisen, die sich in der Vertikalrichtung erstrecken. Die Stützen können mit Querstreben ausgesteift sein und in der Draufsicht eine rechteckige Grundfläche definieren. Anders ausgedrückt kann der Steigerbereich kein Aufzug oder dergleichen sein, welcher das Shuttle aktiv in der Vertikalbewegungsrichtung bewegt. Vielmehr kann der Steigerbereich die Möglichkeit bieten, dass sich das Shuttle durch einen aktiven Betrieb des Shuttles in einer Vertikalbewegungsrichtung fortbewegt. Somit ist der Steigerbereich insbesondere kein Aufzug oder Hebevorrichtung oder dergleichen, da dies ein aktives Agieren des Steuerbereichs voraussetzen würde. Insbesondere ist der Steigerbereich ortsfest zu dem Regalbereich angeordnet. Der Steigerbereich kann beispielsweise ein Führungselement für ein Shuttle aufweisen, sodass das Shuttle sich sicher in der Vertikalbewegungsrichtung bewegen kann. Dabei muss die Vertikalbewegungsrichtung nicht strikt vertikal sein, sondern kann einen Winkel zwischen der Horizontalen in einem Bereich zwischen 0° und 90° aufweisen. Durch den passiven Steigerbereich ist eine einfache und standfeste Bedienung des Regalsystems gewährleistet, das nicht zu Fehlsteuerungen durch ein aktivgesteuerten Steigerbereich kommen kann. Ferner können sich auch mehrere Shuttle in demselben Steigerbereich fortbewegen.

Bei dem Shuttle kann es sich beispielsweise um ein radgestütztes Regalbediengerät handeln, welches dazu ausgestaltet ist, Waren aufzunehmen und in den Regalbereich ein- und auszulagern. Beispielsweise kann ein solches Shuttle vier Räder aufweisen, die auf Schienen geführt werden können. Ferner ist es denkbar, dass das Shuttle auch auf andere Art und Weise geführt werden kann (wie beispielsweise als Einschienenbahn, mittels Elektromagnetismus usw.). Gemäß einem Aspekt der vorliegenden Erfindung, steht das passive Regalsystem im Vordergrund, welches durch Verzicht auf jegliche aktive Steuerung eine Fehlsteuerung durch eine fehlerhafte aktive Steuerung funktionsbedingt ausschließt. Daher kann das passive Regalsystem besonders vorteilhaft betrieben werden, da zum einen keine aktive Steuerung (mit Sensoren und Aktuatoren, welche dazu notwendig sind) notwendig ist und zum anderen keine Fehlbedienung bei einer fehlerhaften aktiven Steuerung des passiven Regalsystems auftreten kann.

Vorzugsweise ist der Steigerbereich so ausgestaltet, dass sich das Shuttle in der Vertikalbewegungsrichtung ausschließlich in der vertikalen Richtung in dem Steigerbereich bewegen kann. Mit anderen Worten kann sich die Vertikalbewegungsrichtung mit einem Winkel zur Horizontalen von im Wesentlichen 90° erstrecken. Im Wesentlichen kann hierbei bedeuten, dass eine vertikale Erstreckung der Vertikalbewegungsrichtung auch dann angenommen wird, wenn diese einen Winkel zur Horizontalen von 88° bis 92° einschließt (d.h. eine Toleranz von ± 2° aufweist). Somit kann vermieden werden, dass sich das Shuttle schräg von einem Regalschienenabschnitt zu einem vertikal beabstandeten Regalschienenabschnitt bewegt. Folglich kann Bauraum für das Regalsystem eingespart werden, da keine Diagonalbewegungsbahn des Shuttles vorgesehen sein muss.

Vorzugsweise ist der Steigerbereich so ausgestaltet, dass sich das Shuttle bidirektional in der Vertikalbewegungsrichtung bewegen kann. Mit anderen Worten kann sich das Shuttle in ein und demselben Steigerbereich sowohl nach oben (in der Vertikalbewegungsrichtung aufsteigend) als auch nach unten (in der Vertikalbewegungsrichtung absteigend) bewegen. Hierbei kann die Vertikalbewegungsrichtung der Schwererichtung entsprechen. Somit kann ein Regalsystem beispielsweise mit lediglich einem Steigerbereich ausgestaltet sein, sodass mehr Platz für den Lagerbereich zur Verfügung steht. Alternativ kann das Regalsystem mit zwei Steigerbereichen, welche jeweils an einem Ende eines Regalschienenabschnitts angeordnet sind, versehen sein. In diesem Fall kann der eine Steigerbereich für eine in der Vertikalbewegungsrichtung nach oben gerichtete Bewegung des Shuttles zuständig sein, wohingegen der andere Steigerbereich für eine in der Vertikalbewegungsrichtung abwärts gerichtete Bewegung des Shuttles zuständig sein kann. Somit kann ein effektiver Kreisverkehr der Shuttle in dem Regalsystem bereitgestellt sein. Zudem können alle Steigerbereiche identisch ausgestaltet sein, was die Produktionskosten senkt. Nichtsdestotrotz können sich auch mehrere Shuttles in einem Steigerbereich in der Vertikalbewegungsrichtung bewegen. Hierbei müssen die Bewegungsrichtungen der einzelnen Shuttles nicht identisch sein. Mit anderen Worten kann ein Shuttle in einem Steigerbereich mit einer nach oben gerichteten Bewegungsrichtung fahren, wohingegen ein anderes Shuttle in demselben Steigerbereich mit einer abwärts gerichteten Bewegungsrichtung fahren kann. Dies ist beispielsweise nützlich, wenn mehrere Shuttles unterschiedliche Startpunkte und unterschiedliche Zielpunkte (d.h. unterschiedliche Zielebenen im Lagerbereich) haben. Somit kann ein effizienter Betrieb der Shuttle in dem Regalsystem bereitgestellt sein, und unnötige Wege der Shuttle können vermieden werden.

Vorzugsweise verlaufen die Regalschienenabschnitte an einer ersten Längsseite der Regalböden, und vorzugsweise ist an einer zweiten Längsseite der Regalböden, welche der ersten Längsseite gegenüberliegt, ein in Längsrichtung verlaufender Wandabschnitt angeordnet. Die Regalböden können eine plattenartige Struktur aufweisen, welche in einer Haupterstreckungsrichtung ihre größte Erstreckung aufweisen. In dieser Haupterstreckungsrichtung kann auch die Längsseite der Regalböden verlaufen. Die Regalböden und die Regalschienenabschnitte können so relativ zueinander angeordnet sein, dass das Shuttle die Längsseite der Regalböden bei einer Vorbeifahrt passiert. An der anderen Längsseite der Regalböden, d. h. an der Längsseite, die dem Regalschienenabschnitt abgewandt ist, kann ein Wandabschnitt angeordnet sein. Der Wandabschnitt kann von dem Regalboden vorstehen. Vorzugsweise kann der Wandabschnitt zusammen mit dem Regalboden ein im Wesentlichen L-förmiges Element bilden. Der Wandabschnitt kann kontinuierlich oder intermittierend vorgesehen sein. Der Wandabschnitt kann als Anmesspunkt für eine Messeinrichtung des Shuttles dienen. Somit kann ein Shuttle bei einer Vorbeifahrt an dem Regalboden durch eine Erfassungseinheit bestimmen, ob Waren auf dem Regalboden liegen und/oder an welcher Position diese Waren liegen. Ist der Regalboden leer, kann die Erfassungseinheit des Shuttles den Wandabschnitt anmessen. Da einer Auswerteeinheit (d.h. beispielsweise einer Steuereinheit) bekannt ist, an welcher Position sich der Wandabschnitt befindet (d. h. wie tief die Regalböden sind), kann eindeutig bestimmt werden, bei welchem Messergebnis der Erfassungseinheit der Wandabschnitt angemessen wird und somit kann bestimmt werden, dass der Regalboden leer ist. Ist beispielsweise kein Wandabschnitt vorhanden, so misst die Erfassungseinheit ins Leere und ein Ergebnis kann abhängig von dem angrenzenden Umfeld des Regalbodens variieren. Dadurch kann eine Bestimmung, ob der Regalboden leer ist oder nicht, schwieriger und unzuverlässiger werden. Daher kann der Wandabschnitt zum einen als Messpunkt dienen und zum anderen verhindern, dass Waren über den Regalboden hinausgeschoben werden.

Vorzugsweise sind die Regalschienenabschnitte direkt mit den Regalböden verbunden. In diesem Fall können die Regalschienenabschnitte flanschartige Elemente sein, die von den Regalböden vorstehen. Dabei können die Regalschienenabschnitte eine Fahroberfläche aufweisen, auf welcher das Shuttle fahren kann. Die Fahroberfläche kann eine von der Regalbodenoberfläche unterschiedliche Vertikalposition aufweisen, insbesondere kann die Fahroberfläche tiefer liegen als die Regalbodenüberfläche. Somit kann sichergestellt sein, dass das Shuttle Waren problemlos von dem Regalboden aufnehmen kann, da verhindert ist, dass zwischen Regalboden und Shuttle eine Kante gebildet ist. Beispielsweise können die Regalschienenabschnitte integral mit den Regalböden gebildet sein. Hierbei ist eine besonders einfache Montage des Regalsystems gewährleistet, da die Position der Regalschienenabschnitte relativ zu den Regalböden nicht aufwendig eingestellt bzw. eingemessen werden müssen. Ferner werden Montagefehler vermieden und die Standhaftigkeit erhöht. Damit kann ein sicherer Betrieb des Regalsystems gewährleistet sein.

Vorzugsweise weist der Steigerbereich Vertikalschienenabschnitte auf, welche so ausgestaltet sind, dass sich das Shuttle vertikal darauf fortbewegen kann. Darauf fortbewegen kann bedeuten, dass sich das Shuttle während einer Bewegung in der Vertikalbewegungsrichtung mit den Vertikalschienenabschnitten in Kontakt ist. Ferner kann das Shuttle mit den Vertikalschienenabschnitten reibschlüssig und/oder formschlüssig in Kontakt stehen oder in Kontakt gebracht werden. Somit können die Vertikalschienenabschnitte dazu ausgestaltet sein, eine Kraft von dem Shuttle aufzunehmen, um dem Shuttle zu ermöglichen, sich in der Vertikalbewegungsrichtung nach oben oder nach unten fortzubewegen. Die Vertikalschienenabschnitte können integral mit dem Steigerbereich gebildet sein. Somit kann gewährleistet sein, dass deren Position in dem Steigerbereich korrekt ist und Montagefehler können vermieden werden. Die Vertikalschienenabschnitte können an den Stützen des Steigerbereichs befestigt oder angeordnet sein. Vorzugsweise umfasst der Steigerbereich vier Stützen und vier Vertikalschienenabschnitte.

Vorzugsweise sind die Vertikalschienenabschnitte als Zahnschiene und/oder Reibschiene ausgestaltet. Die Zahnschiene kann eine Reihe von Erhebungen, den Zähnen, in welche ein Zahnrad eingreifen kann, aufweisen. Genauer gesagt kann das Shuttle zumindest ein Zahnrad aufweisen, welches mit der Zahnstange oder Zahnschiene in Kontakt gebracht werden kann. Die Geometrie der Zahnschiene kann dabei der abgewickelten Geometrie des Zahnrads des Shuttles mit Evolventen-, Zykloiden- oder Konchoiden-Verzahnung entsprechen. Der Abstand von einem Zahn zum nächsten Zahn kann als die Teilung der Zahnschiene bezeichnet sein. Die Teilung dividiert durch π ergibt das Modul der Zahnstange. Das Modul oder die Durchmesserteilung ist ein Maß für die Größe der Zähne von Zahnrädern. Sein Wert basiert typisch auf der Längeneinheit Millimeter und ergibt sich aus dem Teilkreisdurchmesser geteilt durch die Zähnezahl. Vorzugsweise liegt der Modul in einem Bereich von 1 bis 8, vorzugsweise von 4 bis 6. Die Zahnschiene kann ein gerades Maschinenelement mit einer Reihe von Erhebungen sein, in die das Zahnrad des Shuttles eingreifen kann. Der Verfahrweg kann sich nach dem mittleren Umfang des Zahnkranzes des antreibenden Zahnrads, beim sogenannten Teilkreisdurchmesser D und der Anzahl seiner Umdrehungen N als ein Produkt aus π mal D mal N bestimmen. Alternativ oder zusätzlich kann eine Reibschiene als der Vertikalschienenabschnitt vorgesehen sein, wobei die Reibschiene eine Fläche bereitstellen kann, welche mit einem komplementären Element (beispielsweise einem Gummireifen oder dergleichen) des Shuttles in Kontakt stehen kann. Durch eine Anpresskraft zwischen Shuttle und Vertikalschienenabschnitt kann eine ausreichend große Reibung zwischen dem Rad des Shuttles und der Reibschiene bereitgestellt sein, sodass das Shuttle bei einem Antreiben des Rads entlang der Reibschiene vertikal bewegt werden kann (d.h. in der Vertikalbewegungsrichtung). Somit kann ein einfach ausgestalteter Steigerbereich bereitgestellt sein, um das Shuttle in einer Vertikalbewegungsrichtung im Steigerbereich bewegen zu können. Vorzugsweise ist die Zahnschiene gerade in der Vertikalbewegungsrichtung vorgesehen. Dadurch kann die Zahnschiene besonders einfach montiert werden. Vorzugsweise übernimmt alleine das Shuttle eine Steuerung einer Bewegung davon, daher ist es nicht notwendig eine Führung durch die Zahnschiene zu verändern (z.B. durch Weichen oder Bögen oder dergleichen).

Vorzugsweise weist der Steigerbereich zumindest einen Führungsabschnitt auf, mit welchem das Shuttle während einer Bewegung in der Vertikalbewegungsrichtung in Eingriff gelangen kann. Mit anderen Worten kann der Steigerbereich einen Führungsabschnitt aufweisen, der dazu ausgestaltet ist, das Shuttle zu führen und/oder zu sichern. Dazu kann der Führungsabschnitt eine Nut oder Vertiefung sein, in welche das Shuttle mit einem korrespondierenden Element eingreifen kann. Der Führungsabschnitt kann hierbei eine Führungsfunktion zwischen zwei Regalebenen aufweisen. An der jeweiligen Position einer Regalebene kann der Führungsabschnitt das Shuttle freigeben, sodass dieses problemlos aus dem Steigerbereich ausfahren oder einfahren kann. So kann der Führungsabschnitt beispielsweise eine T-förmige Vertiefung sein, in die ein Sicherungselement des Shuttles eingreifen kann. An den Bereichen, die der Höhe der Regalebenen entspricht, kann die T-förmige Vertiefung geöffnet sein, sodass das Shuttle problemlos aus dem Führungsabschnitt hinaus oder hinein gelangen kann. Dadurch kann das Shuttle bei einer Bewegung zwischen zwei Regalebenen durch die Führungsabschnitt gesichert sein. So kann beispielsweise bei einem Versagen eines Antriebs des Shuttles oder einem mechanischen Versagen der Vertikalschienenabschnitte verhindert werden, dass das Shuttle abstürzt. Ferner kann durch den Führungsabschnitt die Position des Shuttles in dem Steigerbereich definiert sein. Dadurch kann eine hohe Betriebssicherheit gewährleistet sein.

Vorzugsweise weist der Steigerbereich zumindest einen Horizontalschienenabschnitt auf, welcher so ausgestaltet ist, dass das Shuttle horizontal in den Steigerbereich ein- und ausfahren kann. Der Horizontalschienenabschnitt kann hierbei eine Fahroberfläche aufweisen, auf welche das Shuttle aufsetzbar ist und verfahrbar ist, die derjenigen der Regalschienenabschnitte entspricht. Somit kann ein Shuttle in einer horizontalen Bewegungsrichtung auf den Regalschienenabschnitten fahren und problemlos in den Steigerbereich (d. h. auf die Horizontalschienenabschnitte) einfahren. Genauso kann das Shuttle auf den Horizontalschienenabschnitten aus dem Steigerbereich ausfahren. Vorteilhafterweise entspricht eine Länge der Horizontalschienenabschnitte im Wesentlichen der Länge des Shuttles. Mit anderen Worten kann der Steigerbereich eine Erstreckung in der Horizontalfortbewegungsrichtung aufweisen, die im Wesentlichen der Länge des Shuttles entspricht. Somit kann ein unnötig langer Steigerbereich vermieden werden und der zur Verfügung stehende Raum optimal genutzt werden. Alternativ oder zusätzlich kann der Steigerbereich auch passierbar ausgestaltet sein. Mit anderen Worten kann der Steigerbereich zwischen zwei Regalbereichen angeordnet sein und durch Shuttle horizontal durchfahren werden auch ohne sich in der Vertikalbewegungsrichtung fortzubewegen.

Vorzugsweise ist der Horizontalschienenabschnitt von einer Horizontalbewegungsposition, in welcher sich das Shuttle horizontal in dem Steigerbereich bewegen kann, in eine Vertikalbewegungsposition, in welcher sich das Shuttle vertikal in dem Steigerbereich bewegen kann, überführbar. Mit anderen Worten kann sich das Shuttle in dem Steigerbereich horizontal bewegen (d.h. in der Horizontalbewegungsrichtung), wenn der Horizontalschienenabschnitt der Horizontalbewegungsposition ist. Analog dazu kann sich das Shuttle nur dann vertikal im Steigerbereich bewegen (d.h. in einer Vertikalbewegungsrichtung), wenn der Horizontalschienenabschnitt in der Vertikalbewegungsposition ist. Dadurch kann ein gemeinsamer Raum in dem Steigerbereich sowohl für die Horizontalbewegung als auch für die Vertikalbewegung des Shuttles genutzt werden, wodurch eine hocheffiziente Ausnutzung des zur Verfügung stehenden Raums gewährleistet ist. Mit anderen Worten kann der Steigerbereich eine kompakte Dimension aufweisen, wodurch mehr Raum für den Regalbereich zur Verfügung steht. Dadurch kann eine Effizienz des Regalsystems gesteigert sein. Die Horizontalbewegungsposition kann dabei eine ausgeklappte Position des Horizontalschienenabschnitts darstellen. Die Vertikalbewegungsposition kann eine abgeklappte Position des Horizontalschienenabschnitts darstellen. Der Steigerbereich weist vorzugsweise pro Regalebene zwei Horizontalschienenabschnitte auf. Somit ist der Steigerbereich geeignet für Shuttle mit zwei Achsen und vier Rädern. Damit ist kann ein sicherer Betrieb des Shuttles in dem Regalsystem sichergestellt sein.

Vorzugsweise geschieht eine Überführung des Horizontalschienenabschnitts von einer Horizontalbewegungsposition in eine Vertikalbewegungsposition ohne aktive Steuerung des Regalsystems. Vielmehr kann der Steigerbereich so ausgestaltet sein, dass eine Überführung des Horizontalschienenabschnitts von der Horizontalbewegungsposition in die Vertikalbewegungsposition oder andersherum durch das Shuttle bewirkt werden kann. Genauer gesagt kann abhängig von der Bewegungsrichtung des Shuttles die dazu passende Position des Horizontalschienenabschnitts automatisch bereitgestellt sein. Beispielsweise kann ein Shuttle, welches sich in der Vertikalbewegungsrichtung nach oben bewegt, gegen ein darüber liegenden Schienenabschnitt fahren und diesen aus der Horizontalbewegungsposition in die Vertikalbewegungsposition bringen. Anschließend kann das Shuttle den Horizontalschienenabschnitt in der Vertikalbewegungsrichtung passieren. Somit ist keine aufwändige Steuerung des Regalsystems notwendig, um den Horizontalschienenabschnitt in die gewünschte Position zu bringen. Vielmehr kann dies durch eine Bewegungsrichtung des Shuttles automatisch geschehen. Um die automatische Steuerung des Steigerbereichs durch das Shuttle bereitzustellen, kann der Steigerbereich beispielsweise Aktuatoren aufweisen, die eine Bewegung des Shuttles in eine passende Position des Horizontalschienenabschnitts überführen. Die Aktuatoren können vorzugsweise mechanisch ausgestaltet sein. Genauer gesagt können die Aktuatoren Anschlagspunkte oder Berührungspunkte sein, welche von dem Shuttle angefahren werden und entsprechend der Richtung, in welche diese von dem Shuttle angefahren werden, können die Aktuatoren mechanisch Steuerungsbefehle weitergeben, die den Horizontalschienenabschnitt in die gewünschte Position (d. h. in die Horizontalbewegungsposition oder die Vertikalbewegungsposition) bringen. Dadurch kann eine besonders einfache Steuerung des Regalsystems ohne die Notwendigkeit einer externen aktiven Steuerung durch Steuergeräte oder dergleichen bereitgestellt sein.

Vorzugsweise ist der Horizontalschienenabschnitt so an dem Steigerbereich gelagert, dass er ohne externe Betätigung aus der Vertikalbewegungsposition in die Horizontalbewegungsposition zurückkehrt. Mit anderen Worten kann eine Lage des Horizontalschienenabschnitts in der Vertikalbewegungsposition dergestalt sein, dass sich der Horizontalschienenabschnitt in einer labilen Lage befindet. Dies kann bedeuten, dass sich der Horizontalschienenabschnitt ohne eine externe Betätigung aus der Vertikalbewegungsposition wegbewegt, nämlich in die Horizontalbewegungsposition.

Dies kann insbesondere ohne ein zusätzliches Element wie Feder oder dergleichen realisiert sein. Beispielsweise kann das Shuttle den Horizontalschienenabschnitt in die Vertikalbewegungsposition bringen, um den Horizontalschienenabschnitt zu passieren. Anschließend kann der Horizontalschienenabschnitt von selbst wieder in die Horizontalbewegungsposition zurückkehren. Daher kann eine besonders einfache Ausgestaltung des Steigerbereichs bereitgestellt sein. Dies kann dadurch erreicht werden, dass der Horizontalschienenabschnitt mittels einem Verbindungselement so um einen Drehpunkt herum drehbar gelagert ist, dass der Horizontalschienenabschnitt keine stabile Lage in der Vertikalbewegungsposition einnehmen kann. Dies kann beispielsweise durch einen oder mehrere Anschläge realisiert sein.

Vorzugsweise fluchtet der Horizontalschienenabschnitt in der Horizontalbewegungsrichtung zu zumindest einem Regalschienenabschnitt, sodass das Shuttle von dem Horizontalschienenabschnitt des Steigerbereichs auf den Regalschienenabschnitt des Regalbereichs und von dem Regalschienenabschnitt auf den Horizontalschienenabschnitt fahren kann. Mit anderen Worten können die Horizontalschienenabschnitte des Steigerbereichs in der Horizontalbewegungsposition immer an derselben Stelle relativ zu dem Regalschienenabschnitt derselben Regalebene angeordnet sein. Somit bietet sich der Vorteil, dass das Shuttle stets problemlos in den Steigerbereich ein- und ausfahren kann. So ist es beispielsweise bei aktiven Aufzugsystemen aus dem Stand der Technik oft schwierig, die Beförderungsplattform, auf welcher ein Shuttle angeordnet ist, so relativ zu einem Regalboden zu positionieren, dass das Shuttle problemlos ein- und ausfahren kann. Dieses Problem stellt sich bei der vorliegenden Ausführungsform nicht, da der Horizontalschienenabschnitt in der Horizontalbewegungsposition immer an derselben Stelle angeordnet ist. Ferner kann durch die selbsttätige Rückkehr des Horizontalschienenabschnitts in die Horizontalbewegungsposition sichergestellt sein, dass das Shuttle immer problemlos in den Steigerbereich einfahren kann. Somit kann eine Betriebssicherheit gesteigert werden und die Fehleranfälligkeit des Regalsystems reduziert werden.

Vorzugsweise ist der Horizontalschienenabschnitt der Vertikalbewegungsposition abgeklappt, sodass ein Vertikalbewegungsraum für das Shuttle in dem Steigerbereich gebildet ist. So kann der Horizontalschienenabschnitt beispielsweise um im Wesentlichen 90° abgeklappt sein, da in dieser Position, der Horizontalschienenabschnitt in der Vertikalbewegungsrichtung den geringsten Raum einnimmt. Dadurch kann die Raumnutzung weiter intensiviert werden, sodass eine Lagereffizienz des Regalsystems gesteigert ist.

Vorzugsweise ist der Horizontalschienenabschnitt durch zumindest einen ersten Arm schwenkbar um einen ersten Drehpunkt im Steigerbereich gelagert. Der erste Arm kann hierbei beispielsweise ein kragarmartiges Element sein, an dessen Außenende der Horizontalschienenabschnitt angebracht ist. Der Horizontalschienenabschnitt kann fest mit dem ersten Arm verbunden sein. Ferner kann der erste Arm eine Biegung aufweisen, sodass der Horizontalschienenabschnitt in der Horizontalbewegungsposition in der Vertikalbewegungsrichtung oberhalb des ersten Drehpunkts angeordnet ist. Dadurch kann sichergestellt sein, dass in der Vertikalbewegungsposition (d.h. in der abgeklappten Position des Horizontalschienenabschnitts) der Horizontalschienenabschnitt in einer Richtung orthogonal zu der Vertikalbewegungsrichtung von dem ersten Drehpunkt beabstandet ist, sodass ein besonders großer Raum für eine Vertikalbewegung des Shuttles gebildet ist. Mit anderen Worten kann durch die Biegung des ersten Arms erreicht werden, dass der Horizontalschienenabschnitt weit aus dem Bewegungsraum des Steigerbereichs abgeklappt ist, sodass das Shuttle ausreichend Platz hat sich in einer Vertikalbewegungsrichtung zu bewegen. Damit kann die Raumeffizienz des Steigerbereichs weiter erhöht sein. Ferner kann der erste Arm so ausgestaltet sein, dass er einen ersten Armabschnitt aufweist, welcher den ersten Drehpunkt mit dem Horizontalschienenabschnitt verbindet sowie einen zweiten Armabschnitt aufweist, welcher den Drehpunkt mit dem gegenüberliegenden Außenende des ersten Arms verbindet. Hierbei kann der zweite Armabschnitt zumindest halb so lang sein wie der erste Armabschnitt. Dadurch kann gewährleistet sein, dass sich der Horizontalschienenabschnitt in einer abgeklappten Position (d.h. in der Vertikalbewegungsposition) in einer mechanisch labilen Stellung befindet und sich nach einem Passieren des Shuttles automatisch wieder in die Horizontalbewegungsposition zurückklappt. Dadurch kann ein sicherer Betrieb des Regalsystems gewährleistet sein.

Vorzugsweise ist ein dritter Arm in dem Steigerbereich vorgesehen, welcher an seinem Außenende ein erstes Kontaktelement aufweist, und vorzugsweise ist der dritte Arm in der Horizontalbewegungsrichtung unter dem Horizontalschienenabschnitt angeordnet. Der dritte Arm kann also zusätzlich zu dem ersten Arm den Horizontalschienenabschnitt lagern. Hierbei ist es vorzugsweise vorgesehen, dass der dritte Arm nicht mit dem Horizontalschienenabschnitt fest verbunden ist. Somit kann bei einer Bewegung des Horizontalschienenabschnitts von der Horizontalbewegungsposition in die Vertikalbewegungsposition der dritte Arm relativ zu dem Horizontalschienenabschnitt verschoben werden. Insbesondere kann der dritte Arm mittels des ersten Kontaktelements mit dem Horizontalschienenabschnitt in Kontakt sein. Das erste Kontaktelement kann hierbei in der Vertikalbewegungsrichtung nach unten von dem Horizontalschienenabschnitt vorragen. Fährt während eines Betriebs des Regalsystems ein Shuttle in der Vertikalbewegungsrichtung von unten an den Horizontalschienenabschnitt heran, kann das Shuttle zu allererst mit dem ersten Kontaktelement in Berührung kommen. Fährt das Shuttle dann weiter in der Vertikalbewegungsrichtung nach oben (d.h. gegen den Horizontalschienenabschnitt), kann das Shuttle den Horizontalschienenabschnitt wegdrücken. Mit anderen Worten kann das Shuttle den Horizontalschienenabschnitt von der Horizontalbewegungsposition in die Vertikalbewegungsposition überführen. Hierbei kann das erste Kontaktelement so ausgestaltet sein, dass es zuerst und direkt mit dem Shuttle in Kontakt kommt. Beispielsweise ist das erste Kontaktelement eine drehbar gelagerte Rolle, sodass es zu einer verringerten Reibung zwischen Shuttle und dritten Arm kommt. Mit anderen Worten kann das Kontaktelement zum einen mit dem Shuttle in Kontakt kommen und zum anderen mit dem Vertikalschienenabschnitt, so dass das Shuttle nicht direkt mit dem Horizontalschienenabschnitt in Kontakt kommen kann. Somit können der Wartungsaufwand und der Verschleiß reduziert sein.

Vorzugsweise ist der dritte Arm um einen zweiten Drehpunkt schwenkbar gelagert, der von dem ersten Drehpunkt beabstandet ist. Vorzugsweise liegen der erste Drehpunkt und der zweite Drehpunkt auf einer Geraden, die vertikal zu der Horizontalen ist oder parallel zu der Vertikalbewegungsrichtung ist. Somit kann der Horizontalschienenabschnitt durch ein parallelogrammartiges Gestänge aus ersten und dritten Arm verschwenkt werden. Zudem kann die Vertikalbewegungsposition als eine labile Lage definiert werden. Somit kann sichergestellt werden, dass sich der Horizontalschienenabschnitt von selbst aus der Vertikalbewegungsposition in die Horizontalbewegungsposition zurückbringt. Dadurch kann die Betriebssicherheit gesteigert sein.

Vorzugsweise ist ein zweiter Arm um einen zweiten Drehpunkt schwenkbar in dem Steigerbereich vorgesehen, wobei der zweite Arm vorzugsweise an seinem Außenende, ein zweites Kontaktelement aufweist, und so angeordnet ist, dass das zweite Kontaktelement in der Horizontalbewegungsposition unterhalb des Horizontalschienenabschnitts angeordnet ist, und wobei der zweite Arm vorzugsweise so gelagert ist, dass er selbsttätig in die Horizontalbewegungsposition zurückkehrt. Der zweite Arm kann zusammen mit dem Horizontalschienenabschnitt in die Vertikalbewegungsposition gebracht werden. Von der Vertikalbewegungsposition kann der zweite Arm dann selbsttätig wieder in die Horizontalbewegungsposition zurückkehren. Beispielsweise kann der zweite arm gleichzeitig mit dem Horizontalschienenabschnitt durch ein Shuttle in die Vertikalbewegungsposition (d.h. ausgelenkt) gebracht werden. Somit ist der zweite Arm geneigt, aus der Vertikalbewegungsposition in eine andere (d.h. in der Horizontalbewegungsposition) zurückzukehren. Dies kann beispielsweise dadurch realisiert sein, dass der zweite Arm einen Anschlag aufweist, der einen Bewegungswinkel zwischen der Horizontalbewegungspositionen der Vertikalbewegungsposition von <90° zulässt. Mit anderen Worten kann durch den Anschlag eine größere Winkelbewegung des zweiten Arms verhindert werden. Somit kann sichergestellt sein, dass der zweite Arm stets in die Horizontalbewegungsposition zurückkehrt. Der zweite Arm kann so ausgestaltet sein, dass er aus der Vertikalbewegungsposition in die Horizontalbewegungsposition zurückkehrt bevor der Horizontalschienenabschnitt dies tut. Mit anderen Worten kann der Horizontalschienenabschnitt noch in der abgeklappten Position sein und dort beispielsweise durch das Shuttle gehalten sein, wohingegen der zweite Arm bereits wieder in die Horizontalbewegungsposition zurückgekehrt ist. Dies bietet den Vorteil, dass durch den zweiten Arm ein Aktuator bereitgestellt sein kann, welcher erkennt, wenn das Shuttle eine bestimmte Bewegung vollführt. Somit kann der zweite Arm dazu ausgestaltet sein, einen angrenzenden Horizontalschienenabschnitt (d.h. nicht der Horizontalschienenabschnitt, an welchem der zweite Arm angeordnet ist) von der Horizontalbewegungsposition in die Vertikalbewegungsposition zu bringen, falls eine solche Bewegungsrichtung durch das Shuttle initiiert wird. So kann der zweite Arm beispielsweise so ausgestaltet sein, dass, wenn ein Shuttle in der Vertikalbewegungsrichtung von oben nach unten fährt, und den zweiten Arm kontaktiert, der darunter liegender Horizontalabschnitt durch einen Verbindungsmechanismus (weitere Details dazu folgen unten) von der Horizontalbewegungsposition in die Vertikalbewegungsposition gebracht werden kann. Somit kann sichergestellt sein, dass ein Shuttle problemlos von oben nach unten in der Vertikalbewegungsrichtung durch den Steigerbereich hindurchfahren kann. Ferner ist denkbar, dass, wenn das Shuttle in der Vertikalbewegungsrichtung von unten gegen den zweiten Arm fährt, durch den Verbindungsmechanismus bewirkt werden kann, dass der darunterliegende Horizontalschienenabschnitt von der Vertikalbewegungsposition in eine Horizontalbewegungsposition gebracht wird. Somit kann das Shuttle gezielt, Horizontalschienenabschnitte in dem Steigerbereich ein- und/oder ausklappen (d.h. von der Horizontalbewegungsposition in die Vertikalbewegungsposition oder andersherum) bringen, um gezielt bestimmte Regalebenen anzufahren. Dadurch kann ein vollkommen passiver Steigerbereich realisiert sein, ohne dass eine externe Steuerung des Steigerbereichs notwendig ist.

Vorzugsweise weist der Steigerbereich zumindest einen Verbindungsmechanismus auf, welcher einen ersten Arm eines ersten Horizontalschienenabschnitts mit einem zweiten Arm eines angrenzenden zweiten Horizontalschienenabschnitts verbindet, sodass bei einer Auslenkung des zweiten Arms des zweiten Horizontalschienenabschnitts der erste Horizontalschienenabschnitt von der Horizontalbewegungsposition in die Vertikalbewegungsposition gebracht werden kann. Mit anderen Worten kann durch den zweiten Arm ein benachbarter Horizontalschienenabschnitt gesteuert werden. Der zweite Horizontalschienenabschnitt kann hierbei in der Vertikalbewegungsrichtung über dem ersten Horizontalschienenabschnitt angeordnet sein. Will ein Shuttle beispielsweise in dem Steigerbereich absteigen, so kann das Shuttle in den Steigerbereich auf den Horizontalschienenabschnitt (z.B. der erste Horizontalschienenabschnitt) einfahren. Anschließend kann das Shuttle sich vertikal nach oben bewegen, bis es den darüberliegenden Horizontalschienenabschnitt (z.B. den zweiten Horizontalschienenabschnitt) aus der Horizontalbewegungsposition in die Vertikalbewegungsposition gebracht hat. Bei dem Passieren des zweiten Horizontalschienenabschnitts, bewegt sich der zweite Arm des zweiten Horizontalschienenabschnitts wieder in die Horizontalbewegungsposition zurück, wobei der zweite Horizontalschienenabschnitt mit der Fahrschiene noch in der Vertikalbewegungsposition ist. Dann kann das Shuttle seine Fahrrichtung in der Vertikalbewegungsrichtung ändern und nach unten fahren. Hierbei kann das Shuttle an den zweiten Arm und/oder das zweite Kontaktelement stoßen und den zweiten Arm nach unten auslenken. Durch den Verbindungsmechanismus kann der zweite Arm den ersten Horizontalschienenabschnitt von der Horizontalbewegungsposition in die Vertikalbewegungsposition bringen. Durch die Auslenkung des zweiten Arms (aufgrund des Shuttles) kann der erste Horizontalschienenabschnitt so lange in der Vertikalbewegungsposition gehalten werden, bis das Shuttle in den Bereich des ersten Horizontalschienenabschnitt gelangt ist und den Horizontalschienenabschnitt selbst (beispielsweise durch Kontakt mit dem ersten Kontaktelement des ersten Horizontalschienenabschnitts) in der Vertikalbewegungsposition hält. Wenn der zweite Arm des zweiten Horizontalschienenabschnitts nicht mehr von dem Shuttle ausgelenkt wird, kann dieser automatisch in die Horizontalbewegungsposition zurückkehren. Passiert das Shuttle den ersten Horizontalschienenabschnitt, kann das Shuttle mit dem zweiten Arm des ersten Horizontalschienenabschnitts in Kontakt kommen, um in gleicher Art und Weise den nächsten darunter liegenden Horizontalschienenabschnitt in die Vertikalbewegungsposition zu bringen. So kann das Shuttle durch den Steigerbereich absteigen.

Vorzugsweise sind der erste Arm und der dritte Arm an einem ihrer Außenenden gelenkig miteinander verbunden. Somit kann bei einer Abklappbewegung des Horizontalschienenabschnitts von der Horizontalbewegungsposition in die Vertikalbewegungsposition eine parallelogrammartige Bewegungsstruktur realisiert sein, die eine besonders gute Führung des Horizontalbewegungsabschnitts gewährleistet. Ferner kann dadurch ein Verkanten oder ungewolltes Spiel im System vermieden werden. Dadurch kann auch bei einer Vielzahl von Bewegungswiederholungen die Standfestigkeit des Steigerbereich sichergestellt sein.

Vorzugsweise weist das Regalsystem zumindest eine Zulaufstrecke und zumindest eine Abführstrecke für Shuttle auf, wobei die Zulaufstrecke und die Abführstrecke vorzugsweise direkt mit zumindest einem Steigerbereich verbunden sind. Die Zulaufstrecke und die Abführstrecke können auf derselben, insbesondere nur einer Ebene, angeordnet sein. Mit anderen Worten kann der Steigerbereich ein Eingangstor und/oder Ausgangstor des Regalsystems bilden. Vorzugsweise kann das Regalsystem zwei Steigerbereiche aufweisen, jeweils einen an einem Eingang und Ausgang des Regalbereichs. Dadurch können Fahrstrecken effizient verkürzt werden und sichergestellt sein, dass das Shuttle keine unnötigen Wege zurücklegen muss.

Vorzugsweise umfasst das Regalsystem ein Shuttle, welches dazu ausgestaltet ist mittels eines Vertikalantriebs sich vertikal in einem Steigerbereich fortzubewegen und mittels eines Horizontalantriebs sich in den Regalbereichen horizontal fortzubewegen. Der Vertikalantrieb kann beispielsweise zumindest ein Gummirad und/oder ein Zahnrad sein, welches mit dem Vertikalschienenabschnitt so zusammenwirken kann, dass sich das Shuttle in dem Steigerbereich vertikal fortbewegen kann. Das Shuttle kann dazu ausgestaltet sein, zu transportierende Waren auf einem Warenablagebereich abzulegen und zu transportieren. Mit anderen Worten kann das Shuttle Waren nur in einem darauf aufliegenden Weise transportieren. Waren unter das Shuttle in einer hängenden Weise zu transportieren, ist insbesondere nicht möglich.

Gemäß einem weiteren Aspekt der vorliegenden Erfindung wird ein Verfahren zum Betreiben eines der obigen Regalsysteme bereitgestellt. Hierbei kann das Verfahren ein Bereitstellen eines der obigen Regalsysteme umfassen. Ferner kann das Verfahren ein Betreiben eines Shuttles in dem Steigerbereich umfassen, sodass es sich in der Vertikalbewegungsrichtung fortbewegt. Vorzugsweise erfolgt der Steuerung des Steigerbereichs auf mechanische Weise durch das Shuttle. Insbesondere kann die mechanische Steuerung des Steigerbereichs ausschließlich durch das Shuttle erfolgen. Somit müssen keine anderen mechanischen Steuerbefehle an den Steigerbereich oder das Regalsystem übermittelt werden, um Waren ein- oder auszulagern. Somit kann ein völlig passives Regalsystem betrieben werden. Lediglich das Shuttle kann einen aktiven Part des Regalsystems darstellen. Das Regalsystem an sich kann lediglich durch Betreiben des Shuttles gesteuert sein. Gemäß einem weiteren Aspekt der vorliegenden Erfindung wird eine Verwendung eines Regalsystems gemäß einer der obigen Ausführungsformen zur Lagerung und/oder Kommissionierung von Waren bereitgestellt.

Merkmale einzelner Ausführungsformen können mit anderen Merkmalen anderer Ausführungsformen oder anderen Ausführungsformen kombiniert werden und so neue Ausführungsformen bilden. Die neuen Ausführungsformen weisen die in Zusammenhang mit den Merkmalen genannten Vorteile und Eigenschaften auf. Ausgestaltungen und Vorteile, die in Verbindung mit dem Verfahren genannt sind, gelten analog auch für die Vorrichtung und andersherum.

Im Folgenden werden zu bevorzugenden Ausführungsformen mit Bezug auf die beigefügten Figuren im Detail beschrieben.
- **Fig. 1**: zeigt eine schematische und perspektivische Ansicht eines passiven Regalsystems gemäß einer Ausführungsform der vorliegenden Erfindung.
- **Fig. 2**: zeigt eine perspektivische und schematische Ansicht eines Regalbereichs eines Regalsystems gemäß einer Ausführungsform der vorliegenden Erfindung.
- **Fig. 3**: zeigt eine schematische Schnittansicht durch einen Regalbereich gemäß einer Ausführungsform der vorliegenden Erfindung.
- **Fig. 4**: zeigt eine schematische und perspektivische Schnittansicht durch einen Regalbereich gemäß einer Ausführungsform der vorliegenden Erfindung.
- **Fig. 5**: zeigt schematisch einen passiven Steigerbereich mit einem darin befindlichen Shuttle gemäß einer Ausführungsform der vorliegenden Erfindung.
- **Fig. 6**: ist eine perspektivische und schematische Detailansicht eines Steigerbereichs gemäß einer Ausführungsform der vorliegenden Erfindung.
- **Fig. 7**: ist eine schematische perspektivische Detailansicht eines Steigerbereichs gemäß einer Ausführungsform der vorliegenden Erfindung.
- **Fig. 8**: ist eine schematische perspektivische Schnittansicht eines Bestandteils eines Steigerbereichs gemäß einer Ausführungsform der vorliegenden Erfindung.
- **Fig. 9**: ist eine schematische Seitenansicht eines Teils eines Steigerbereichs gemäß einer Ausführungsform der vorliegenden Erfindung.
- **Fig. 10**: ist eine perspektivische schematische Ansicht eines Steigerbereich gemäß einer Ausführungsform der vorliegenden Erfindung.
- **Fig. 11A** und **Fig. 11B**: sind jeweils schematische und perspektivische Ansichten eines Steigerbereichs in unterschiedlichen Betriebspositionen.
- **Figuren 12A** und **12B**: sind jeweils schematische und perspektivische Ansichten eines Teils eines Steigerbereichs in unterschiedlichen Betriebspositionen.

Bei der folgenden Figurenbeschreibung sind gleiche Elemente mit gleichen Bezugszeichen bezeichnet. Dies gilt auch bei der Verwendung gleicher Elemente in unterschiedlichen Ausführungsform.

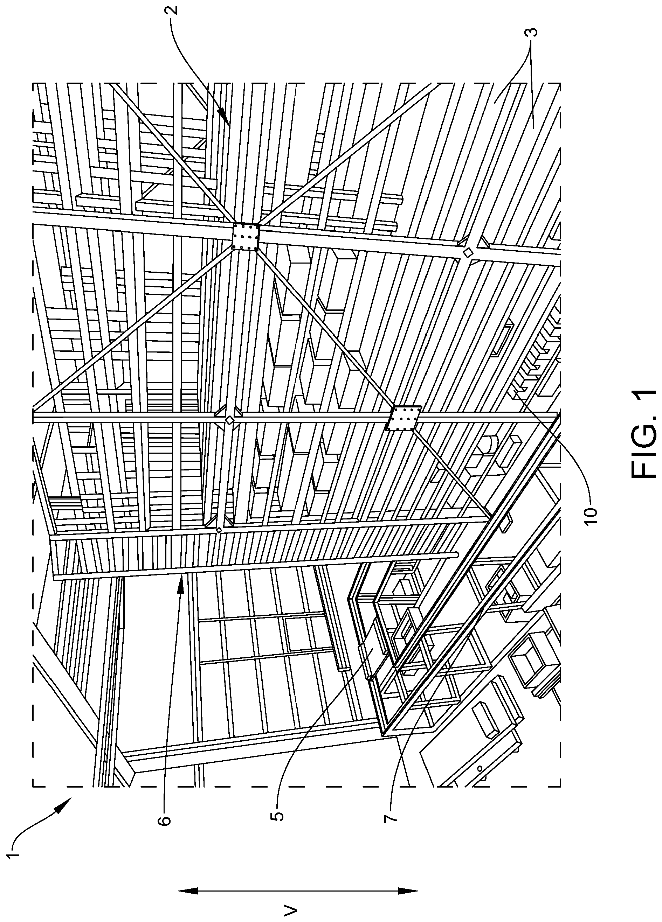

**Fig. 1** ist eine perspektivische und schematische Ansicht eines passiven Regalsystems 1 gemäß einer Ausführungsform der vorliegenden Erfindung. Das Regalsystem 1 umfasst einen Regalbereich 2 sowie einen Steigerbereich 6. Im vorliegenden Fall ist der Regalbereich 2 direkt mit dem Steigerbereich 6 verbunden. Ferner ist eine Zulaufstrecke 7 dargestellt, auf der ein Shuttle 5 bewegbar ist. Der Regalbereich 2 ist nur indirekt mit der Zulaufstrecke 7 verbunden. Mit anderen Worten ist der Regalbereich 2 nur über den Steigerbereich 6 mit der Zulaufstrecke 7 verbunden. Somit muss das Shuttle 5 durch den Steigerbereich 6 hindurchfahren, um in den Regalbereich 2 zu gelangen. Der Regalbereich 2 weist eine Vielzahl von Regalböden 3 auf. Die Regalböden 3 sind horizontal übereinander angeordnet. Mit anderen Worten weist jeder Regalboden 3 eine andere Vertikalposition auf. Den Regalböden 3 sind Regalschienenabschnitten 4 (in Fig. 1 nicht dargestellt) zugeordnet, sodass das Shuttle 5 entlang der Regalböden 3 verfahrbar ist. Das Shuttle 5 ist dazu ausgestaltet, verschiedene Waren 10, in die Regalböden 3 einzulagern oder daraus auszulagern. Unter Ein- und Auslagen wird bei der vorliegenden Ausführungsform verstanden, die Waren 10 auf die Regalböden 3 abzulagern und/oder aus diesen abzutransportieren. Damit das Shuttle 5 die verschiedenen Regalböden 3, welche auf unterschiedlichen Vertikalpositionen vorgesehen sind, erreicht, kann das Shuttle 5 durch den Steigerbereich 6 seine Vertikalposition in der Vertikalbewegungsrichtung V verändern. Dazu kann sich das Shuttle selbst angetrieben vertikal durch den Steigerbereich 6 bewegen. An einer gewünschten Position in der Vertikalen kann das Shuttle 5 auf die entsprechenden Regalschienenabschnitte 4 des Regalbereichs 2 einfahren, um die gewünschten Regalböden 3 zu erreichen. Bei der vorliegenden Ausführungsform bewegt sich das Shuttle 5 strikt (d.h. ausschließlich) vertikal durch den Steigerbereich. Auf den Horizontalschienenabschnitten 4 in dem Regalbereich 2 bewegt sich das Shuttle strikt (d.h. ausschließlich) horizontal.

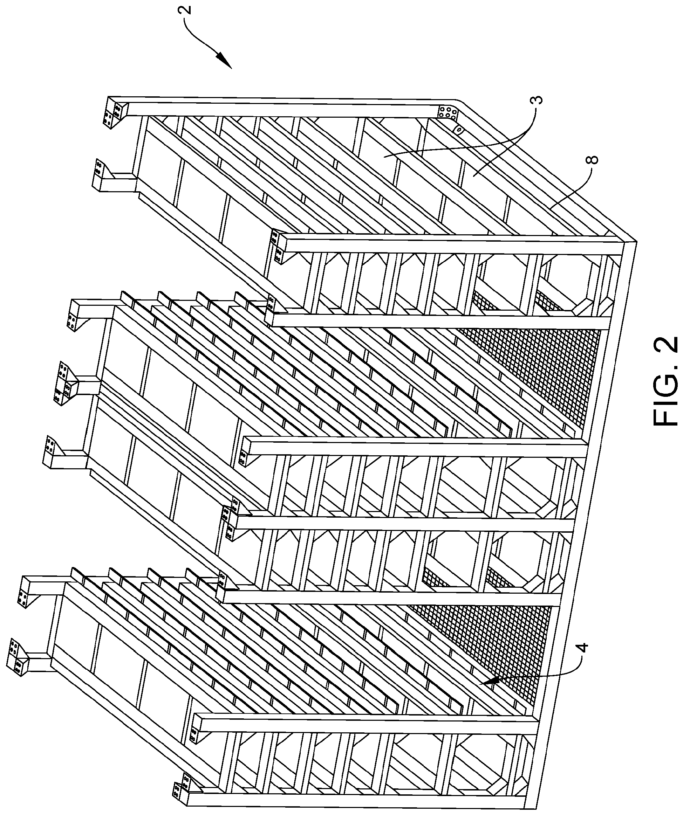

**Fig.** 2 ist eine schematische perspektivische Ansicht eines Regalbereichs 2 eines passiven Regalsystems 1 gemäß einer Ausführungsform der vorliegenden Erfindung. Bei dem in Fig. 2 dargestellten Regalbereich 2 sind die Regalschienenabschnitte 4 zu erkennen, die den Regalböden 3 zugeordnet sind. Die Regalböden 3 sind jeweils in einer Regalebene nebeneinander angeordnet. Jedem Regalboden 3 ist ein Regalschienenabschnitt 4 zugeordnet, so dass zwei gegenüberliegende Regalböden 3 einen befahrbaren Regalschienenabschnitt 4 bildet. Ferner ist in Fig. 2 ein Wandabschnitt 8 zu erkennen, der an jedem Regalboden 3 vorgesehen ist. Der Wandabschnitt 8 ist an den Regalböden an einer Längsseite davon vorgesehen, die den Regalschienenabschnitten 4 abgewandt ist. Damit kann ein definierter Anmesspunkt für ein Sensorsystem des Shuttles 5 bereitgestellt werden. Somit kann das Shuttle 5 bei einer Vorbeifahrt mit dem Sensorsystem einfach erfassen ob Ware auf dem Regalboden angeordnet ist, wo diese Ware liegt und/oder ob der Regalboden 3 leer ist.

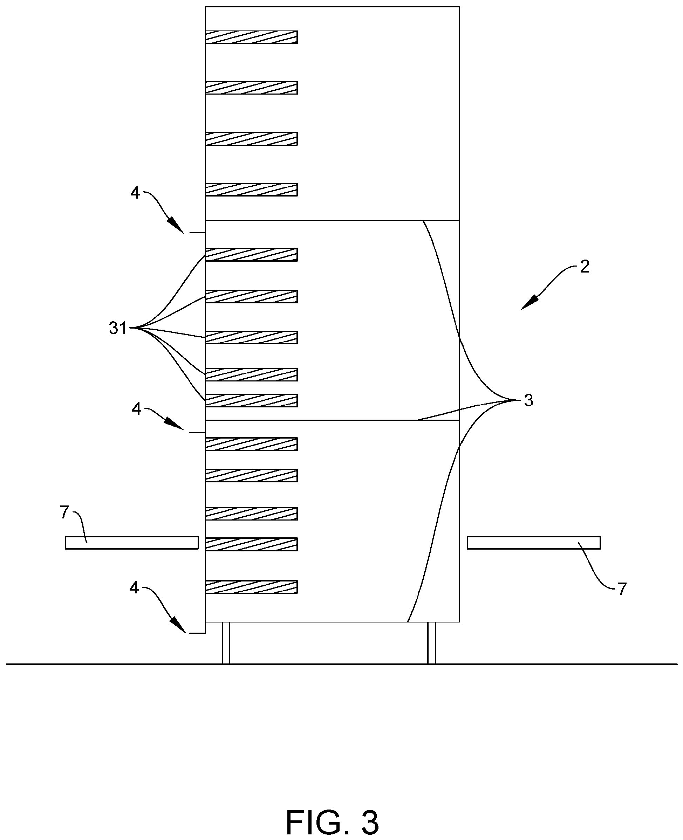

**Fig. 3** ist eine schematische Schnittansicht durch einen Regalbereich 2 einer Ausführungsform der vorliegenden Erfindung. In Fig. 3 sind drei Regalböden 3 an unterschiedlichen Vertikalpositionen übereinander angeordnet dargestellt. Diesen drei Regalböden 3 sind jeweils Regalschienenabschnitte 4 zugeordnet. Bei der vorliegenden Ausführungsform weist der Regalbereich 2 zudem eine Vielzahl von Zwischenregalböden 31 auf. Die Zwischenregalböden 31 sind an unterschiedlichen Vertikalpositionen zwischen zwei Regalböden 3 angeordnet. Diese Zwischenregalböden 31 unterscheiden sich von den Regalböden 3, in dem diesen Zwischenregalböden 31 keine Regalschienenabschnitte 4 zugeordnet sind. Vielmehr können diese Zwischenregalböden 31 durch das Shuttle 5 bedient werden, indem das Shuttle 5 die auf die Zwischenregalböden 31 einzulagernden Waren aktiv den Zwischenregalböden 31 zuführt. Dies kann beispielsweise durch einen Hebelmechanismus oder einen Greifmechanismus, welcher auf dem Shuttle 5 angeordnet ist, realisiert sein. Die Zwischenregalböden 31 eignen sich beispielsweise dafür besonders leichte oder kleine Waren einzulagern. Hierfür wäre es nicht wirtschaftlich den Zwischenregalböden 31 extra Regalschienenabschnitte 4 zuzuordnen. Ferner ist in Fig. 3 noch eine Ebene der Zufuhrstrecke 7 schematisch dargestellt. Gemäß einer Ausführungsform beträgt die lichte Weite zwischen zwei aneinander angrenzenden Regalböden 3 (d.h. zwischen zwei Regalböden 3, die jeweils einen Regalschienenabschnitt 4 aufweist, ca. 653 mm.

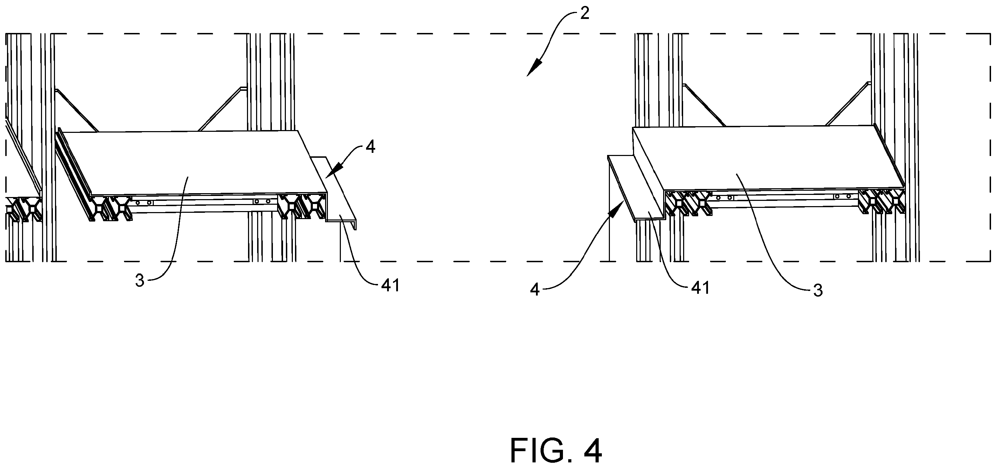

**Fig. 4** ist eine schematische und perspektivische Schnittansicht durch einen Regalbereich 2 gemäß einer Ausführungsform der vorliegenden Erfindung. Bei der vorliegenden Ausführungsform sind die Regalschienenabschnitte 4 integral mit den Regalböden 3 ausgebildet. Dadurch kann die Position einer Fahroberfläche 41, welche auf den Regalschienenabschnitten 4 gebildet ist, relativ zu den Regalböden 3 immer konstant sein, unabhängig davon, wer oder wie der Regalbereich 2 montiert wird. Das Shuttle 5 kann mit Rädern auf den Fahroberflächen 41 der Regalschienenabschnitte 4 fahren.

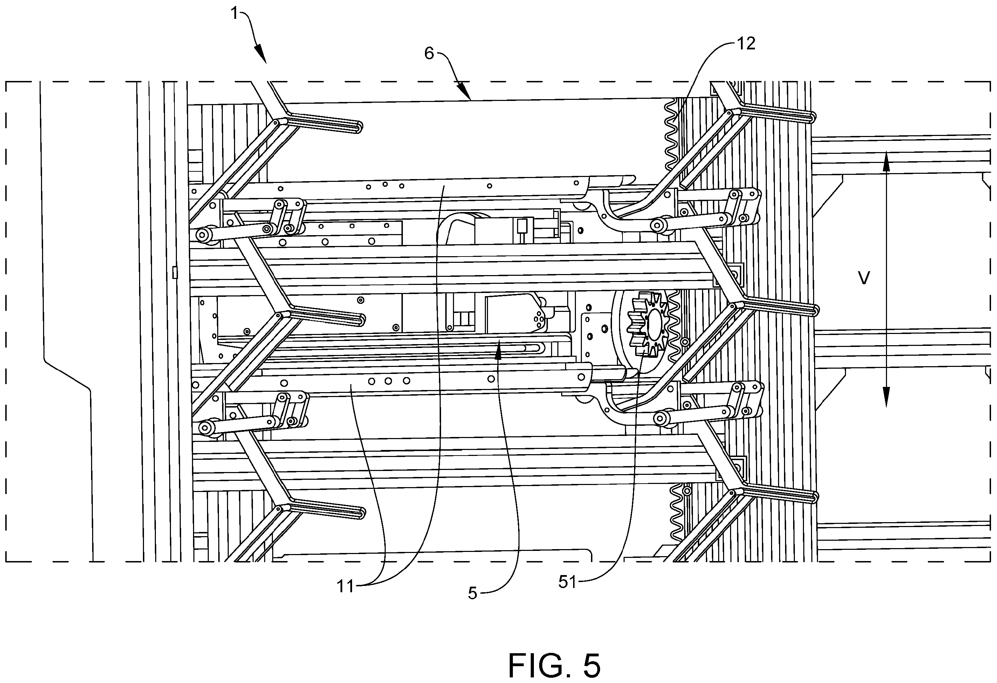

**Fig. 5** ist eine schematische Ansicht eines Abschnitts eines Steigerbereichs 6 mit einem darin befindlichen Shuttle 5. Der Steigerbereich 6 weist eine Vielzahl von Horizontalschienenabschnitten 11 auf, von denen jeweils zwei einer Regalebene (d.h. einer Ebene der Regalböden) zugeordnet sind. Die Regalschienenabschnitte 11 sind dabei beweglich in dem Steigerbereich 6 gelagert. Folglich können die Horizontalschienenabschnitte 11 abgeklappt werden. Genauer gesagt, können die Horizontalschienenabschnitte 11 in einer Horizontalbewegungsposition oder in einer Vertikalbewegungsposition positioniert sein. Ferner weist der Steigerbereich 6 Vertikalschienenabschnitte 12 auf, mit deren Hilfe das Shuttle 5 sich in der Vertikalbewegungsrichtung V fortbewegen kann. Auf den Horizontalschienenabschnitten 11 kann sich das Shuttle 5 also horizontal fortbewegen und auf den Vertikalschienenabschnitten 12 kann sich das Shuttle 5 vertikal fortbewegen. Die Vertikalschienenabschnitte 12 sind bei der vorliegenden Ausführungsform als eine Zahnschiene ausgebildet. Mit dieser kann ein Antriebssystem 51 des Shuttles 5 in Eingriff gebracht werden. Beispielsweise kann das Antriebssystem 51 des Shuttles 5 ein Zahnrad aufweisen, welches mit der Zahnschiene (d.h. mit dem Vertikalschienenabschnitt) 12 in Eingriff bringbar ist.

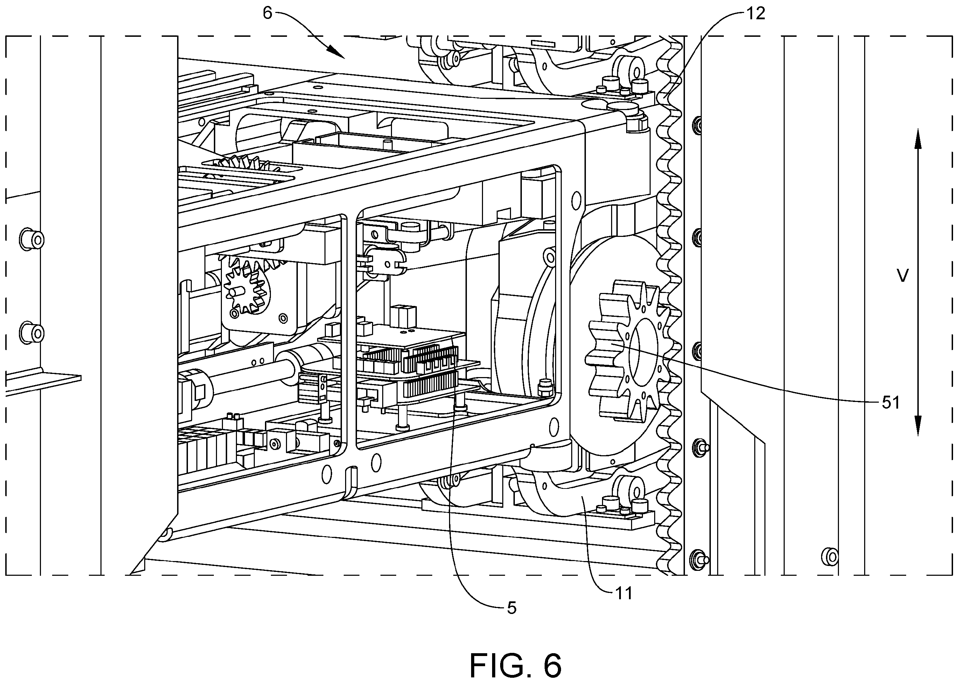

**Fig. 6** ist eine perspektivische Detailansicht eines Ausschnitts des Steigerbereichs 6 mit einem darin befindlichen Shuttle 5. Ferner ist bei dem in Fig. 6 dargestellten Zustand ein Antriebssystem 51 des Shuttles 5 mit der Zahnschiene 12 in Eingriff. In dieser Position kann durch Antreiben des Antriebssystems 51 des Shuttles 5 das Shuttle 5 in der Vertikalbewegungsrichtung fortbewegt werden. Beispielsweise kann sich das Antriebssystem des Shuttles 5 drehen, so dass das Antriebssystem von einer ersten Position, in der das Shuttle 5 auf den Horizontalschienenabschnitten 11 fahren kann, in eine zweite Position, in der das Shuttle 5 auf den Vertikalschienenabschnitten 12, überführt werden kann. In der in Fig. 6 dargestellten Position, befindet sich das Shuttle in der zweiten Position.

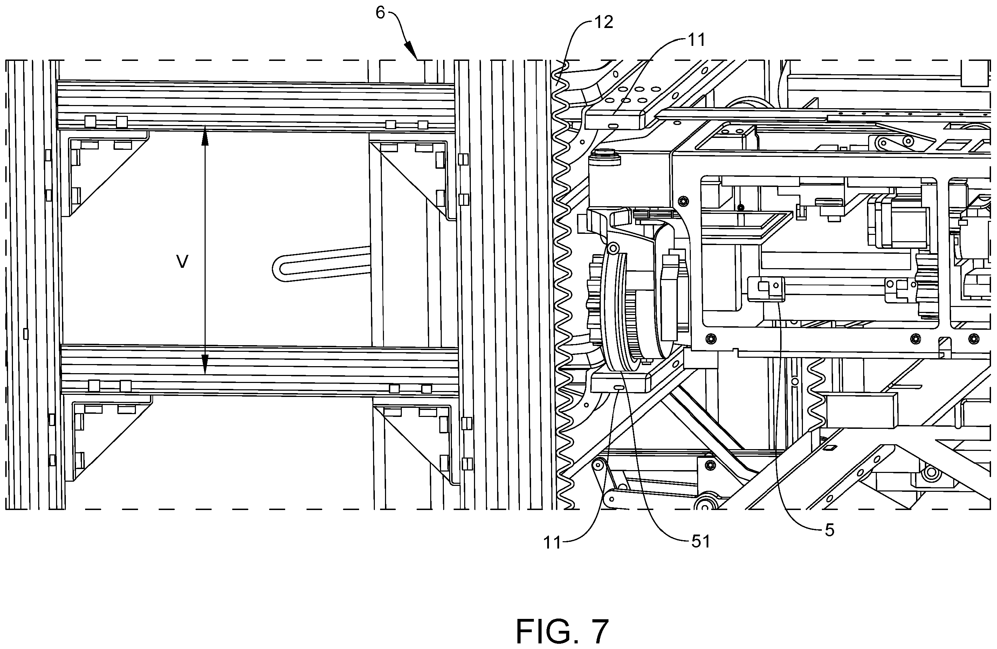

**Fig. 7** ist eine perspektivische Detailansicht eines Steigerbereichs 6 mit einem darin befindlichen Shuttle 5. Im Vergleich zu der in Fig. 6 dargestellten Konfiguration, ist bei der in Fig. 7 dargestellten Konfiguration das Antriebssystem 51 des Shuttles 5 so gedreht, dass das Zahnrad des Antriebssystems 51 nicht mit der Zahnschiene 12 in Eingriff ist. Das Antriebssystem 51 wie es in Fig. 7 dargestellt ist befindet sich in der ersten Position. Vielmehr ist das Antriebssystem 51 des Shuttles 5 als Traktionsantrieb mit dem Horizontalschienenabschnitt 11 in Kontakt, um das Shuttle 5 horizontal in den Steigerbereich 6 hinein oder aus dem Steigerbereich 6 hinaus bewegen zu können. Ferner ist in Fig. 7 zu erkennen, dass die Horizontalschienenabschnitte 11 in einen Bewegungsbereich des Shuttles 5, welcher sich in der Vertikalbewegungsrichtung V erstreckt, hinein erstrecken. Daher ist es gemäß einer vorteilhaften Ausführungsform vorgesehen, dass die Horizontalschienenabschnitte 11 beweglich gelagert sind, um in einem Fall der vertikalen Fortbewegung des Shuttles 5 in der Vertikalbewegungsrichtung V abgeklappt zu werden, um den Bewegungsraum für das Shuttle 5 freizumachen. Folglich kann ein besonders kompakter Steigerbereich 6 erlangt sein.

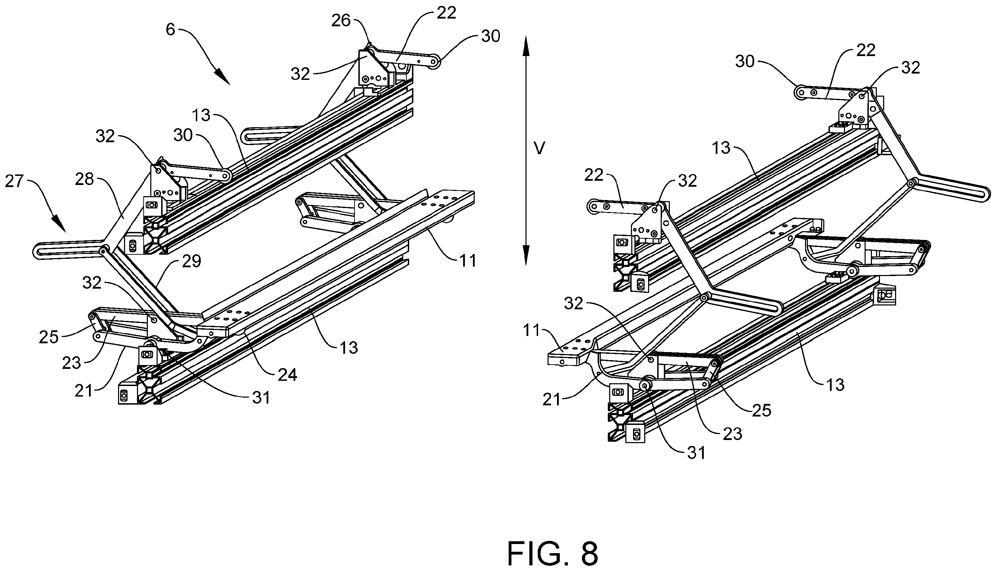

**Fig. 8** sind perspektivische und schematische Ansichten eines Teils eines Steigerbereich 6 gemäß einer Ausführungsform der vorliegenden Erfindung. Genauer gesagt ist in Fig. 8 ein Horizontalschienenabschnitt 11 im Detail aus zwei unterschiedlichen Perspektiven dargestellt. Zur Vereinfachung der Darstellung sind andere Bauteile des Steigerbereichs 6 weggelassen. Die in Fig. 8 links dargestellte Darstellung zeigt den Horizontalschienenabschnitt 11 mit seiner Befestigung 13 in einer schräg von vorne gezeigten Perspektive, wohingegen die in Fig. 8 rechts dargestellte Darstellung den Horizontalschienenabschnitt 11 von einer Ansicht schräg von hinten Darstellung darstellt.

Der Horizontalschienenabschnitt 11 ist fest (d.h. unbeweglich) mit einem ersten Arm 21 verbunden, welcher um einen ersten Drehpunkt 31 herum drehbar an einem Gestell 13 des Steigerbereichs 6 festgelegt ist. Der erste Arm 21 ist, um einen ersten Drehpunkt 31 herum drehbar gelagert. Ferner weist der Steigerbereich 6 einen dritten Arm 23 auf, der schwenkbar an dem Steigerbereich 6 gelagert ist. Genauer gesagt ist der dritte Arm 23 um einen zweiten Drehpunkt 32 herum drehbar gelagert. In der Horizontalbewegungsposition ist der dritte Arm 23 im Wesentlichen parallel zu dem ersten Arm 21 angeordnet. Der dritte Arm 23 weist an seinem einen Außenende ein erstes Kontaktelement 24 auf. Das erste Kontaktelement 24 ist bei der vorliegenden Ausführungsform drehbar an dem dritten Arm 23 gelagert. In einer Ausführungsform ist das erste Kontaktelement 24 eine Rolle. Während einer Vertikalbewegung des Shuttles 5 in der Vertikalbewegungsrichtung V nach oben kann das Shuttle 5 zuerst mit dem ersten Kontaktelement 24 in Kontakt kommen und somit den Horizontalschienenabschnitt 11 nach oben drücken. An seinem zweiten Ende des dritten Arms 23 weist dieser ein Armverbindungselement 25 auf, welches den ersten Arm 21 mit dem dritten Arm 23 verbindet. Somit kann durch Auslenken des dritten Arms 23 der erste Arm 21 angelenkt werden, um den Horizontalschienenabschnitt in die Vertikalbewegungsposition (d. h. in die ausgelenkte Position) zu bewegen. In Fig. 8 sind bei beiden Ansichten ein Teil des Steigerbereichs 6 dargestellt, der jeweils zwei in der Vertikalbewegungsrichtung V übereinander angeordnete Horizontalschienenabschnitte 11 umfasst. Dabei ist der obere Horizontalschienenabschnitt 11 nur teilweise abgebildet, um Elemente der Erfindung zu verdeutlichen. Ferner weist der Steigerbereich 6 einen zweiten Arm 22 auf, der gelenkig an dem Gestell 13 des Steigerbereichs 6 gelagert ist. Der zweite Arm 22 weist an dessen Außenende ein zweites Kontaktelement 30 auf. Das zweite Kontaktelement 30 ist identisch zu dem ersten Kontaktelement 24 ausgestaltet. Der zweite Arm 22 ist um den zweiten Drehpunkt 32 herum drehbar angeordnet. Ferner weist der zweite Arm 22 einen Anschlag 26 auf, der die Schwenkbarkeit des zweiten Arms 22 so einschränkt, dass er von der Vertikalbewegungsposition automatisch in die Horizontalbewegungsposition zurückfällt, wenn eine externe Kraft auf den zweiten Arm 22 aufgehoben ist. Somit kann sichergestellt sein, dass der zweite Arm 22 immer in den Bewegungsbereich in der Vertikalbewegungsrichtung V des Shuttles 5 hineinragt. Von der oben beschriebenen Struktur (d. h. dem Horizontalschienenabschnitt 11 und der zugehörigen Anlenkung) sind eine Vielzahl in einem Steigerbereich 6 übereinander angeordnet. In Fig. 8 ist dies schematisch dargestellt, in dem über dem einen Horizontalschienenabschnitt 11 zusammen mit dessen Anlenkung ein Teil einer Anlenkung eines weiteren Horizontalschienenabschnitts 11 dargestellt ist. Im Folgenden werden die Horizontalschienenabschnitte 11 als erster Horizontalschienenabschnitte 11 und zweiter Horizontalschienenabschnitt 11 bezeichnet, wobei beide Horizontalschienenabschnitte 11 identisch ausgebildet sind. Zur Vereinfachung der Darstellung ist bei der in Fig. 8 dargestellten Anordnung der erste Horizontalschienenabschnitt (der untere) vollständig dargestellt, wohingegen der zweite Horizontalschienenabschnitt (der obere) nur teilweise dargestellt ist. Dabei ist zu erkennen, dass bei dem zweiten Horizontalschienenabschnitt der zweite Arm 22 gut sichtbar ist. Dieser zweite Arm 22 ist auch bei dem ersten Horizontalschienenabschnitt 11 im unteren Teil der Fig. 8 vorhanden, jedoch durch andere Bauteile verdeckt.

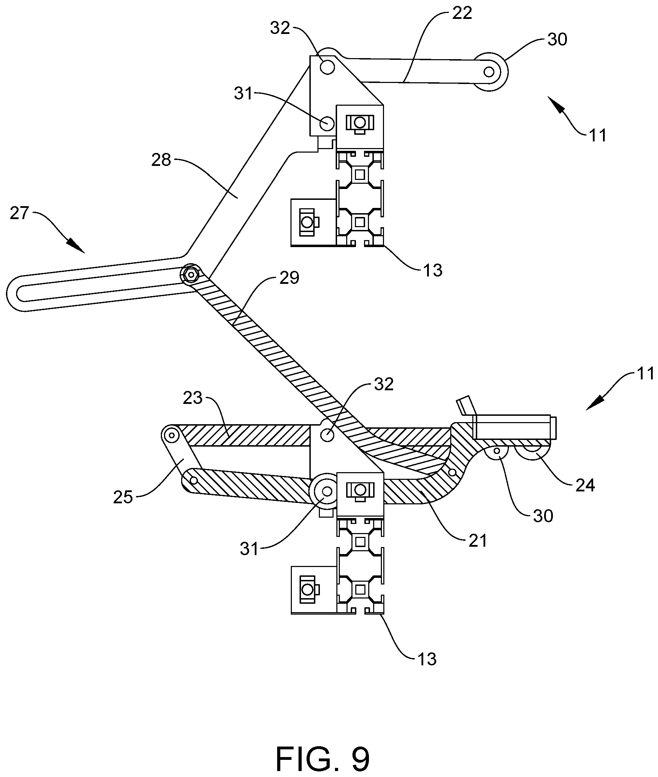

Fig. 9 ist eine schematische Seitenansicht des primären Horizontalschienenabschnitts und des zweiten Horizontalschienenabschnitts 11. Hierbei ist ein Verbindungsmechanismus 27 erkennbar, der den ersten Horizontalschienenabschnitt 11 und den zweiten Horizontalschienenabschnitt 11 miteinander verbindet. Bei einer Anordnung von einer Vielzahl von Horizontalschienenabschnitten 11 übereinander in dem Steigerbereich 6 sind also alle Horizontalschienenabschnitte 11 miteinander verbunden. Der Verbindungsmechanismus 27 umfasst einem ersten Verbindungarm 28 und einem zweiten Verbindungsarm 29. Dabei sind der erste Verbindungsarm 28 und der zweite Verbindungarm 29 so miteinander verbunden, dass sie relativ zueinander beweglich sind. Genauer gesagt weist der erste Verbindungsarm 28 ein Langloch auf, in welches der zweite Verbindungarm 29 eingreift. Ferner ist der erste Verbindungsarm 28 mit dem zweiten Arm 22 des zweiten Horizontalschienenabschnitts 11 verbunden. Der zweite Verbindungsarm 29 ist mit dem ersten Arm 21 des ersten Horizontalschienenabschnitts 11 verbunden. Somit kann eine mechanische Verbindung zwischen dem zweiten Arm 22 des zweiten Horizontalschienenabschnitts 11 und des ersten Arms 21 des ersten Horizontalschienenabschnitts 11 realisiert sein. Somit kann durch ein Shuttle 5, welches in der Vertikalbewegungsrichtung V abwärts in dem Steigerbereich 6 fährt, der zweite Arm 22 des zweiten Horizontalschienenabschnitts 11 ausgelenkt werden. Durch die Auslenkung des zweiten Arms 22 des zweiten Horizontalschienenabschnitts 11 kann über den Verbindungsmechanismus 27 der erste Arm 21 des ersten Horizontalschienenabschnitts 11 betätigt werden, sodass dieser den ersten Horizontalschienenabschnitt 11 von der Horizontalbewegungsposition in die Vertikalbewegungsposition bringt. Somit kann eine Passieren des ersten Horizontalschienenabschnitts 11 in der Vertikalbewegungsrichtung V für das Shuttle 5 realisiert sein.

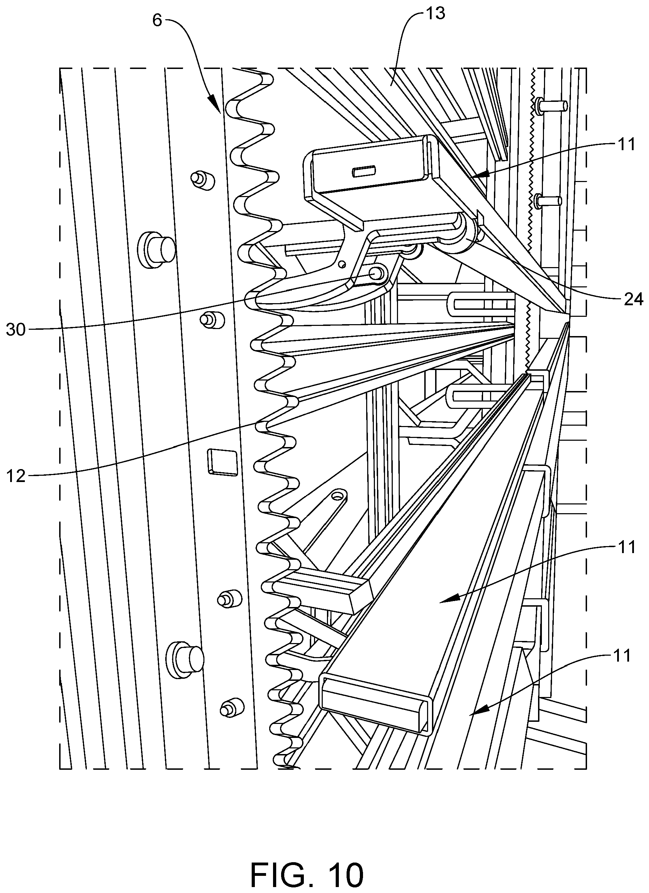

**Fig. 10** ist eine perspektivische Ansicht eines Teils eines Steigerbereichs 6 mit einem Regalbereich 3 im Hintergrund. In Fig. 10 sind das erste Kontaktelement 24 und das zweite Kontaktelement 30 dargestellt, wie sie in der Horizontalbewegungsposition nebeneinander unter dem Horizontalbewegungsabschnitt 11 angeordnet sind. Ferner ist in Fig. 10 zu erkennen, dass der erste Arm 22 und der dritte Arm 23 im Wesentlichen in einer Ebene liegen und beide unter dem Horizontalschienenabschnitt 11 angeordnet sind (in der Horizontalbewegungsposition).

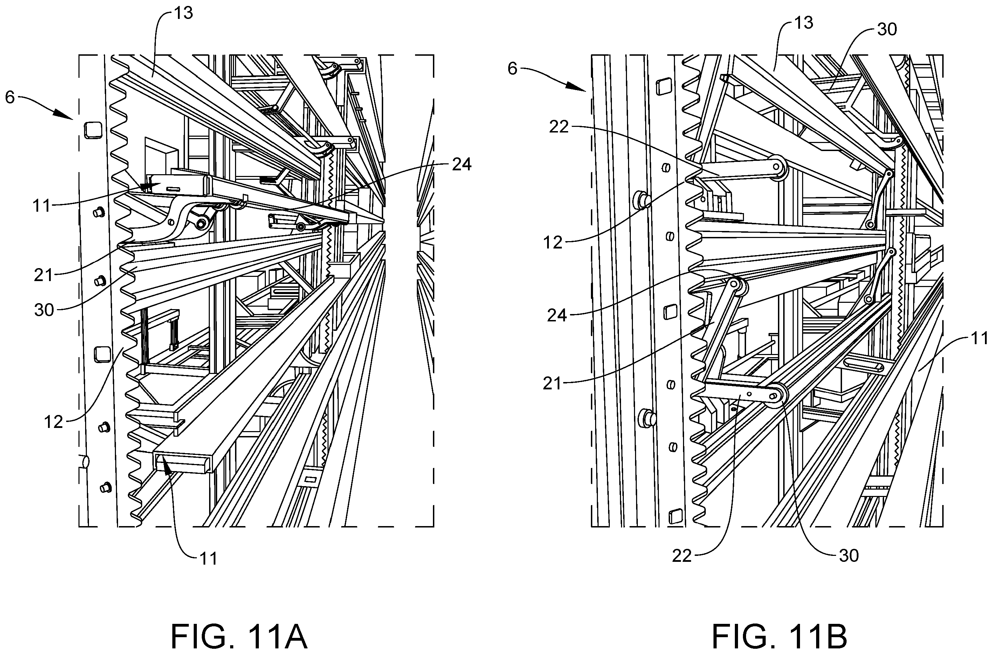

**Figuren 11A** und **11B** stellen jeweils einen Teil des Steigerbereichs dar. Der Unterschied zwischen Fig. 11A und 11B ist, dass die Position des Steigerbereichs. In Fig. 11A ist der Horizontalschienenabschnitt 11 in der Horizontalbewegungsposition dargestellt. Mit anderen Worten kann bei der in Fig. 1 A dargestellten Anordnung das Shuttle 5 horizontal in den Steigerbereich 6 ein- oder ausfahren. In Fig. 11B dagegen ist der Steigerbereich 6 in der Vertikalbewegungsposition dargestellt, in welcher sich der Shuttle 5 in der Vertikalbewegungsrichtung V bewegen kann. Es ist zu beachten, dass die in Fig. 11B dargestellte Position des Horizontalschienenabschnitts 11 ein labiler Gleichgewichtszustand ist und der Horizontalschienenabschnitt 11 nicht von alleine in dieser Position verbleibt, sondern in die Horizontalbewegungsposition zurückfällt. Ferner ist in Fig. 11B zu erkennen, dass der zweite Arm 22 in den Bewegungsbereich des Shuttles 5 reicht, so dass ein sich in dem Bewegungsbereich fahrendes Shuttle 5 den zweiten Arm 22 kontaktiert.

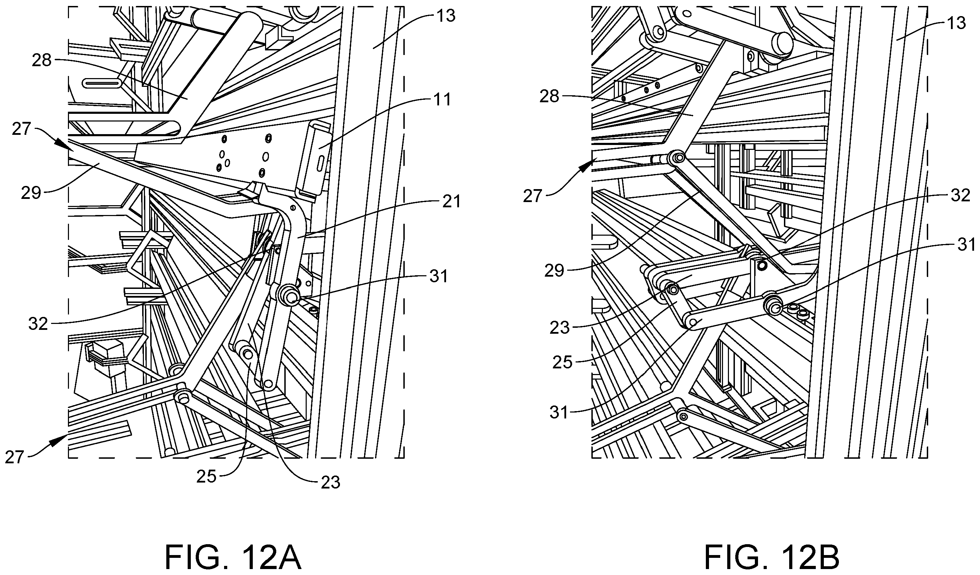

Genauso ist in **Figuren 12A** und **12B** jeweils eine Position des Steigerbereichs 6 dargestellt. In Fig. 12A ist der Steigerbereich in der Vertikalbewegungsposition dargestellt, wohingegen in Fig. 12B der Steigerbereich in der Horizontalbewegungsposition dargestellt ist. Im Unterschied zu Figuren 11A und 11B ist in den Figuren 12A und 12B der Steigerbereich 6 von einer Rückseite aus betrachtet dargestellt. Zu erkenn ist die Verbindung zwischen dem ersten Horizontalschienenabschnitt 11 und dem zweiten Horizontalschienenabschnitt 11 durch den Verbindungsmechanismus 27.

### Bezugszeichenliste:

- 1: passives Regalsystem
- 2: Regalbereich
- 3: Regalboden
- 4: Regalschienenabschnitte
- 5: Shuttle
- 6: passiver Steigerbereich
- 7: Zulaufstrecke
- 8: Wandabschnitt
- 10: Waren
- 11: Horizontalschienenabschnitt
- 12: Vertikalschienenabschnitt
- 13: Gestell
- 21: erster Arm
- 22: zweiter Arm
- 23: dritter Arm
- 24: erstes Kontaktelement
- 25: Armverbindungselement
- 26: Anschlag
- 27: Verbindungsmechanismus
- 28: erster Verbindungarm
- 29: zweiter Verbindungarm
- 30: zweites Kontaktelement
- 31: ersten Drehpunkt
- 32: zweiter Drehpunkt

- V: Vertikalbewegungsrichtung

## Patentansprüche

1. Passives Regalsystem (1), insbesondere für ein Hochregallager, umfassend:
einen Regalbereich (2) mit zumindest zwei Regalböden (3) an unterschiedlichen Vertikalpositionen,
zumindest zwei Regalschienenabschnitte (4), welche jeweils entlang der zumindest zwei Regalböden (3) verlaufen, wobei die Regalschienenabschnitte (4) so ausgestaltet sind, dass sich ein Shuttle (5) horizontal auf den Regalschienenabschnitten (4) fortbewegen kann,
zumindest einen passiven Steigerbereich (6), der die Regalschienenabschnitte (4) miteinander verbindet und so ausgestaltet ist, dass sich das Shuttle (5) durch den Steigerbereich (6) von einem Regalschienenabschnitt (4) zu einem anderen Regalschienenabschnitt (4) in einer Vertikalbewegungsrichtung (V) verlagern kann,
wobei der Steigerbereich (6) zumindest einen Horizontalschienenabschnitt (11) aufweist, welcher so ausgestaltet ist, dass das Shuttle (5) horizontal in den Steigerbereich (6) ein- und ausfahren kann, und
**dadurch gekennzeichnet, dass**
der Horizontalschienenabschnitt (11) in der Vertikalbewegungsposition abgeklappt ist, sodass ein Vertikalbewegungsraum für das Shuttle (5) in dem Steigerbereich (6) gebildet ist.

2. Regalsystem (1) gemäß Anspruch 1, wobei der Steigerbereich (6) so ausgestaltet ist, dass sich das Shuttle (5) bidirektional in der Vertikalbewegungsrichtung (V) bewegen kann

3. Regalsystem (1) gemäß einem der vorhergehenden Ansprüche, wobei der Steigerbereich (6) Vertikalschienenabschnitte (12) aufweist, welche so ausgestaltet sind, dass sich das Shuttle (5) vertikal darauf fortbewegen kann.

4. Regalsystem (1) gemäß einem der vorhergehenden Ansprüche, wobei der Horizontalschienenabschnitt (11) von einer Horizontalbewegungsposition, in welcher sich das Shuttle (5) horizontal in dem Steigerbereich (6) bewegen kann, in eine Vertikalbewegungsposition, in welcher sich das Shuttle (5) vertikal in dem Steigerbereich (6) bewegen kann, überführbar ist.

5. Regalsystem (1) gemäß einem der vorhergehenden Ansprüche, wobei eine Überführung des Horizontalschienenabschnitts (11) von einer Horizontalbewegungsposition in eine Vertikalbewegungsposition ohne aktive Steuerung des Regalsystems (1) geschieht.

6. Regalsystem (1) gemäß einem der vorhergehenden Ansprüche, wobei der Horizontalschienenabschnitt (11) so an dem Steigerbereich (6) gelagert ist, dass er ohne externe Betätigung aus der Vertikalbewegungsposition in die Horizontalbewegungsposition zurückkehrt.

7. Regalsystem (1) gemäß einem der vorhergehenden Ansprüche,
wobei der Horizontalschienenabschnitt (11) durch zumindest einen ersten Arm (21) schwenkbar um einen ersten Drehpunkt (31) an dem Steigerbereich (6) gelagert ist.

8. Regalsystem (1) gemäß einem der vorhergehenden Ansprüche, wobei ein dritter Arm (23) in dem Steigerbereich (6) vorgesehen ist, welcher an seinem Außenende ein erstes Kontaktelement (24) aufweist, und vorzugsweise ist der dritte Arm (23) in der Horizontalbewegungsrichtung unter dem Horizontalschienenabschnitt (11) angeordnet.

9. Regalsystem (1) gemäß Anspruch 8, wobei der dritte Arm (23) um einen zweiten Drehpunkt (32) schwenkbar gelagert ist, der von dem ersten Drehpunkt (31) beabstandet ist.

10. Regalsystem (1) gemäß Anspruch 9, wobei der erste Drehpunkt (31) und der zweite Drehpunkt (32) auf einer Geraden liegen, die vertikal zu der Horizontalen ist oder parallel zu der Vertikalbewegungsrichtung (V) ist.

11. Regalsystem (1) gemäß einem der vorhergehenden Ansprüche,
wobei ein zweiter Arm (22) um einen zweiten Drehpunkt (32) schwenkbar in dem Steigerbereich (6) vorgesehen ist,
wobei der zweite Arm (22) an seinem Außenende ein zweites Kontaktelement (30) aufweist und so angeordnet ist, dass das zweite Kontaktelement (30) in der Horizontalbewegungsposition unterhalb des Horizontalschienenabschnitts (11) angeordnet ist, und
wobei der zweite Arm (22) so gelagert ist, dass er selbsttätig in die Horizontalbewegungsposition zurückkehrt.

12. Regalsystem (1) gemäß Anspruch 11, wobei der Steigerbereich (6) zumindest einen Verbindungsmechanismus (27) aufweist, welcher einen ersten Arm (21) eines ersten Horizontalschienenabschnitts (11) mit einem zweiten Arm (22) eines angrenzenden zweiten Horizontalschienenabschnitts (11) verbindet, so dass bei einer Auslenkung des zweiten Arms (22) des zweiten Horizontalschienenabschnitts (11) der erste Horizontalschienenabschnitt (11) von der Horizontalbewegungsposition in die Vertikalbewegungsposition gebracht werden kann.

13. Regalsystem (1) gemäß einem der vorhergehenden Ansprüche, wobei das Regalsystem (1) zumindest eine Zulaufstrecke (7) und zumindest eine Abführstrecke für Shuttle (5) aufweist, wobei die Zulaufstrecke (7) und die Abführstrecke vorzugsweise direkt mit zumindest einem Steigerbereich (6) verbunden sind.

14. Regalsystem (1) gemäß einem der vorhergehenden Ansprüche, wobei das Regalsystem (1) ein Shuttle (5) umfasst, welches dazu ausgestaltet ist mittels eines Vertikalantriebs sich vertikal in einem Steigerbereich (6) fortzubewegen und mittels eines Horizontalantriebs sich in den Regalbereichen (2) horizontal fortzubewegen.

15. Verfahren zum Betreiben eines Regalsystems (1) gemäß einem der vorhergehenden Ansprüche, wobei das Verfahren umfasst:
Bereitstellen eines Regalsystems (1) gemäß einem der vorhergehenden Ansprüche,
Betrieben eines Shuttles (5) in dem Steigerbereich (6), so dass es sich in der Vertikalbewegungsrichtung (V) fortbewegt,
wobei eine Steuerung des Steigerbereichs (6), insbesondere auf mechanische Weise, durch das Shuttle (5) erfolgt.

## Claims

1. Passive shelving system (1), in particular for a high-bay warehouse, comprising:
a shelf area (2) with at least two shelves (3) at different vertical positions,
at least two shelf rail sections (4), which each run along the at least two shelves (3), wherein the shelf rail sections (4) are designed in such a way that a shuttle (5) can move horizontally on the shelf rail sections (4),
at least one passive riser area (6), which connects the shelf rail sections (4) to one another and is designed such that the shuttle (5) can displace the riser area (6) from one shelf rail section (4) to another shelf rail section (4) in a vertical movement direction (V),
wherein the riser area (6) has at least one horizontal rail section (11), which is designed such that the shuttle (5) can enter and exit the riser area (6) horizontally, and
**characterized in that** the horizontal rail section (11) is folded down in the vertical movement position, so that a vertical movement space for the shuttle (5) is formed in the riser area (6).

2. Shelving system (1) according to claim 1, wherein the riser area (6) is designed such that the shuttle (5) can move bidirectionally in the vertical movement direction (V)

3. Shelving system (1) according to any one of the preceding claims, wherein the riser area (6) has vertical rail sections (12) which are designed such that the shuttle (5) can travel vertically thereon.

4. Shelving system (1) according to any one of the preceding claims, wherein the horizontal rail section (11) can be transferred from a horizontal movement position, in which the shuttle (5) can move horizontally in the riser area (6), to a vertical movement position, in which the shuttle (5) can move vertically in the riser area (6).

5. Shelving system (1) according to any one of the preceding claims, wherein a transfer of the horizontal rail section (11) from a horizontal movement position to a vertical movement position takes place without active control of the shelving system (1).

6. Shelving system (1) according to any one of the preceding claims, wherein the horizontal rail section (11) is supported on the riser area (6) such that it returns from the vertical movement position to the horizontal movement position without external actuation.

7. Shelving system (1) according to any one of the preceding claims,
wherein the horizontal rail section (11) is mounted on the riser area (6) so as to be pivotable about a first pivot point (31) by at least a first arm (21).

8. Shelving system (1) according to any one of the preceding claims, wherein a third arm (23) is provided in the riser area (6), which has a first contact element (24) at its outer end, and preferably the third arm (23) is arranged below the horizontal rail section (11) in the horizontal movement direction.

9. Shelving system (1) according to claim 8, wherein the third arm (23) is pivotally mounted about a second pivot point (32) which is spaced from the first pivot point (31).

10. Shelving system (1) according to claim 9, wherein the first pivot point (31) and the second pivot point (32) lie on a straight line which is vertical to the horizontal or parallel to the vertical movement direction (V).

11. Shelving system (1) according to any one of the preceding claims,
wherein a second arm (22) is provided in the riser area (6) so as to be pivotable about a second pivot point (32),
wherein the second arm (22) has a second contact element (30) at its outer end and is arranged such that the second contact element (30) is arranged below the horizontal rail section (11) in the horizontal movement position, and
wherein the second arm (22) is mounted in such a way that it automatically returns to the horizontal movement position.

12. Shelving system (1) according to claim 11, wherein the riser area (6) has at least one connecting mechanism (27) which connects a first arm (21) of a first horizontal rail section (11) to a second arm (22) of an adjacent second horizontal rail section (11), so that when the second arm (22) of the second horizontal rail section (11) is deflected, the first horizontal rail section (11) can be moved from the horizontal movement position to the vertical movement position.

13. Shelving system (1) according to any one of the preceding claims, wherein the shelving system (1) has at least one infeed section (7) and at least one outfeed section for shuttle (5), wherein the infeed section (7) and the outfeed section are preferably directly connected to at least one riser area (6).

14. Shelving system (1) according to any one of the preceding claims, wherein the shelving system (1) comprises a shuttle (5) which is designed to move vertically in a riser area (6) by means of a vertical drive and to move horizontally in the shelf areas (2) by means of a horizontal drive.

15. Method of operating a shelving system (1) according to any one of the preceding claims, wherein the method comprises:
Providing a shelving system (1) according to any one of the preceding claims,
Operating a shuttle (5) in the riser area (6) so that it moves in the vertical movement direction (V),
wherein the riser area (6) is controlled, in particular mechanically, by the shuttle (5).

## Revendications

1. Système de rayonnage passif (1), en particulier pour un entrepôt à grande hauteur, comprenant :
une zone de rayonnage (2) comportant au moins deux tablettes (3) à des positions verticales différentes,
au moins deux sections de rail de rayonnage (4) qui s'étendent chacune le long desdites au moins deux tablettes (3), les sections de rail de rayonnage (4) étant conçues de manière à permettre à une navette (5) de se déplacer horizontalement sur les sections de rail de rayonnage (4),
au moins une zone de montée passive (6) qui relie les sections de rail de rayonnage (4) entre elles et qui est conçue de manière à permettre à la navette (5) de se déplacer d'une section de rail de rayonnage (4) à une autre section de rail de rayonnage (4) dans une direction de déplacement vertical (V) par l'intermédiaire de la zone de montée (6),
la zone de montée (6) comportant au moins une section de rail horizontal (11) conçue de manière à permettre à la navette (5) d'entrer horizontalement dans la zone de montée (6) et d'en sortir,
**caractérisé en ce que**
dans la position de déplacement vertical, la section de rail horizontal (11) est rabattue vers le bas, formant ainsi un espace de déplacement vertical pour la navette (5) dans la zone de montée (6).

2. Système de rayonnage (1) selon la revendication 1,
dans lequel la zone de montée (6) est conçue de manière à permettre à la navette (5) de se déplacer bidirectionnellement dans la direction de déplacement vertical (V).

3. Système de rayonnage (1) selon l'une des revendications précédentes, dans lequel la zone de montée (6) comporte des sections de rail vertical (12) conçues de manière à permettre à la navette (5) de se déplacer verticalement sur celles-ci.

4. Système de rayonnage (1) selon l'une des revendications précédentes, dans lequel la section de rail horizontal (11) peut être transférée d'une position de déplacement horizontal, où la navette (5) peut se déplacer horizontalement dans la zone de montée (6), vers une position de déplacement vertical, où la navette (5) peut se déplacer verticalement dans la zone de montée (6).

5. Système de rayonnage (1) selon l'une des revendications précédentes, dans lequel le transfert de la section de rail horizontal (11) d'une position de déplacement horizontal vers une position de déplacement vertical se fait sans commande active du système de rayonnage (1).

6. Système de rayonnage (1) selon l'une des revendications précédentes, dans lequel la section de rail horizontal (11) est montée sur la zone de montée (6) de manière à revenir de la position de déplacement vertical à la position de déplacement horizontal sans actionnement externe.

7. Système de rayonnage (1) selon l'une des revendications précédentes, dans lequel la section de rail horizontal (11) est montée sur la zone de montée (6) de manière à pouvoir pivoter autour d'un premier point de pivot (31) par l'intermédiaire d'au moins un premier bras (21).

8. Système de rayonnage (1) selon l'une des revendications précédentes, dans lequel un troisième bras (23) est prévu dans la zone de montée (6), lequel comprend un premier élément de contact (24) à son extrémité extérieure, et de préférence, le troisième bras (23) est disposé en dessous de la section de rail horizontal (11) dans la direction de déplacement horizontal.

9. Système de rayonnage (1) selon la revendication 8,
dans lequel le troisième bras (23) est monté de manière à pouvoir pivoter autour d'un deuxième point de pivot (32) distant du premier point de pivot (31).

10. Système de rayonnage (1) selon la revendication 9,
dans lequel le premier point de pivot (31) et le deuxième point de pivot (32) se situent sur une droite qui est perpendiculaire à l'horizontale ou parallèle à la direction de déplacement vertical (V).

11. Système de rayonnage (1) selon l'une des revendications précédentes, dans lequel un deuxième bras (22) est monté dans la zone de montée (6) de manière à pouvoir pivoter autour d'un deuxième point de pivot (32),
le deuxième bras (22) comprend un deuxième élément de contact (30) à son extrémité extérieure et est disposé de telle sorte que le deuxième élément de contact (30) se trouve en dessous de la section de rail horizontal (11) dans la position de déplacement horizontal, et
le deuxième bras (22) est monté de manière à revenir automatiquement vers la position de déplacement horizontal.

12. Système de rayonnage (1) selon la revendication 11,
dans lequel la zone de montée (6) comporte au moins un mécanisme de liaison (27) qui relie un premier bras (21) d'une première section de rail horizontal (11) à un deuxième bras (22) d'une deuxième section de rail horizontal (11) adjacente, de sorte que lors d'une déviation du deuxième bras (22) de la deuxième section de rail horizontal (11), la première section de rail horizontal (11) peut être transférée de la position de déplacement horizontal vers la position de déplacement vertical.

13. Système de rayonnage (1) selon l'une des revendications précédentes, dans lequel le système de rayonnage (1) comporte au moins une voie d'amenée (7) et au moins une voie d'évacuation pour navettes (5), de préférence, la voie d'amenée (7) et la voie d'évacuation sont reliées directement à au moins une zone de montée (6).

14. Système de rayonnage (1) selon l'une des revendications précédentes, dans lequel le système de rayonnage (1) comprend une navette (5) conçue pour se déplacer verticalement dans une zone de montée (6) au moyen d'un entraînement vertical et pour se déplacer horizontalement dans les zones de rayonnage (2) au moyen d'un entraînement horizontal.

15. Procédé d'exploitation d'un système de rayonnage (1) selon l'une des revendications précédentes, comprenant les étapes consistant à :
fournir un système de rayonnage (1) selon l'une des revendications précédentes,
faire fonctionner une navette (5) dans la zone de montée (6) de manière à ce qu'elle se déplace dans la direction de déplacement vertical (V),
la zone de montée (6) étant commandée, en particulier par voie mécanique, par l'intermédiaire de la navette (5).
